# EUROPÄISCHE PATENTSCHRIFT

(11) **EP 3 759 009 B1**
(45) Veröffentlichungstag und Bekanntmachung des Hinweises auf die Patenterteilung: **18.10.2023**
(21) Anmeldenummer: 19711508.2
(22) Anmeldetag: 27.02.2019
(51) Int. Cl.: B62D 21/20

(54) **LÄNGSTRÄGER UND FAHRGESTELL FÜR EIN STRASSENFAHRZEUG**
LONGITUDINAL MEMBER AND CHASSIS FOR A ROAD VEHICLE
POUTRE LONGITUDINALE POUR UN VEHICULE ROUTIER

(30) Priorität: 01.03.2018 DE 202018101153 U; 01.03.2018 DE 102018104742; 13.07.2018 DE 202018104033 U; 04.10.2018 DE 202018006084 U
(43) Veröffentlichungstag der Anmeldung: 06.01.2021
(73) Patentinhaber: Alois Kober GmbH, 89359 Kötz (DE)
(72) Erfinder: ECKLE, Volker, 89183 Holzkirch (DE); PFAU, Michaela, 89522 Heidenheim an der Brenz (DE); UHL, Stefan, 89312 Günzburg (DE); ZIMMERMANN, Maximilian, 89522 Heidenheim an der Brenz (DE); SPIEGLER, Harald, 89312 Günzburg (DE)
(74) Vertreter: ERNICKE Patent- und Rechtsanwälte PartmbB
(86) Internationale Anmeldenummer: PCT/EP2019/054847
(87) Internationale Veröffentlichungsnummer: WO 2019/166484

(56) Entgegenhaltungen:
- WO-A1-2015/049375
- DE-C2- 2 702 243
- DE-U1- 9 013 689
- DE-U1- 20 110 408
- DE-U1- 20 312 500
- DE-U1- 29 922 270
- DE-U1-202010 005 479
- DE-U1-202012 007 159
- GB-A- 768 379
- US-A1- 2007 007 794
- US-A1- 2007 241 587
- US-A1- 2009 256 399

## Beschreibung

Die Erfindung betrifft einen Längsträger und ein Fahrgestell für ein Straßenfahrzeug mit den Merkmalen in den selbstständigen Ansprüchen.

Ein solcher Längsträger und ein solches Fahrgestell sind aus der DE 27 02 243 C2 bekannt. Die als abgekantete Blechprofile ausgebildeten Längsträger haben an ihrer einzelnen aufrechten Trägerwand vereinzelt schlitzartige Wandöffnungen, zwischen den breite Wandstege verbleiben.

Ein weiteres Beispiel,- wobei wobei der Längsträger als Deichselholm einer bevorzugt starren, V-förmigen Deichsel ausgebildet ist, ist aus der DE 299 22 270 U1 bekannt,- welche die Merkmale der Präambel von Anspruch 1 zeigt.

Es ist Aufgabe der vorliegenden Erfindung, die Fahrgestelltechnik weiter zu verbessern.

Die Erfindung löst diese Aufgabe mit den Merkmalen in den selbstständigen Ansprüchen.

Die beanspruchte Fahrgestelltechnik, d.h. der Längsträger, das damit ausgerüstete Fahrgestell sowie Fahrzeug, der Anbaubeschlag und das Verfahren haben verschiedene Vorteile.

Die Ausbildung der Längsträger mit einer Gitterstruktur, die Wandöffnungen mit dazwischen angeordneten schmalen Stegen aufweist, ermöglicht eine Minderung des Längsträgergewichts unter Beibehaltung der erforderlichen Festigkeit des Längsträgers. Durch die Gewichtseinsparung kann das Gesamtgewicht des Fahrzeugs gesenkt und/oder das Gewicht des Aufbaus bzw. die Nutzlast erhöht werden. Eine Minderung des Gewichts des Längsträgers und des damit ausgerüsteten Fahrgestells kann sich auch günstig auf das Fahrverhalten auswirken. Vorteilhaft sind außerdem die Material- und Kosteneinsparung. Die Gitterstruktur ist in der bevorzugt aufrechten und in Trägerlängsrichtung verlaufenden Wandung des Längsträgers ausgebildet. Die Gitterstruktur reicht über den größten Teil der Längsträgerlänge.

Der beanspruchte Längsträger wird für eine Deichsel eingesetzt. Der Längsträger kann auch für ein Trägerchassis oder ein Anbauchassis eingesetzt werden. Die betreffenden Längsträger werden nachfolgend als Deichselholm und als Chassisholm bezeichnet.

Die Erfindung betrifft in einem eigenen Erfindungsaspekt einen Längsträger an sich für ein Fahrgestell eines Straßenfahrzeugs sowie ein Fahrgestell und ein Straßenfahrzeug mit einem solchen Längsträger, wobei der im Querschnitt profilierte Längsträger eine in Trägerlängsrichtung laufende einzelne aufrechte dünnwandige Trägerwand mit einer an ihrem oberen und/oder unteren Längsrand angeordneten, quer gerichteten Trägerwand aufweist. Die aufrechte Trägerwand weist dabei eine Gitterstruktur mit mehreren Wandöffnungen und dazwischen angeordneten schmalen Wandstege auf, wobei zumindest einige der Wandstege schräg zur Trägerlängsrichtung und dabei in unterschiedlichen Richtungen geneigt sind. Der eigene Erfindungsaspekt betrifft auch die weiteren fallweisen Ausgestaltungen eines solchen Längsträgers mit den jeweiligen nachstehend und auch in den Unteransprüchen genannten Merkmalen, insbesondere bezüglich der Gitterstruktur.

Der Längsträger für ein Trägerchassis kann gewichtssparend gegenüber vorbekannten Konstruktionen verkürzt werden. Die Trägerbereiche in Längsrichtung vor und hinter einer Achsaufnahme können z.B. ein Längenverhältnis von 1/3 : 2/3 oder 1/4 : 3/4 bezogen auf die Gesamtlänge des Längsträgers bzw. Chassisholm haben.

Mit einer Deichsel und einem Trägerchassis kann ein Fahrgestell für einen Anhänger aufgebaut werden. Ein Trägerchassis kann in der Funktion als Anbauchassis auch für ein Kraftfahrzeug zur Verbindung mit einem motorisierten Zugkopf eingesetzt werden. Das Trägerchassis nimmt mindestens eine Achse auf. Es kann ein kurze Länge haben und gewichtssparend mit größerem Abstand vor dem Fahrzeugheck enden, insbesondere bei einem steifen und selbsttragenden Fahrzeugaufbau.

Die Deichsel und das Trägerchassis können als Module ausgebildet sein. Sie können in der Größe und Form variieren und können mit ihren Varianten ein Baukastensystem zur Herstellung unterschiedlicher Fahrgestelle bilden. Mit relativ wenigen Deichsel- und Chassismodulen können eine Vielzahl unterschiedlicher Fahrgestelle zur Befriedigung verschiedener Vorgaben von Fahrzeugherstellern gebildet werden. Die Vorgaben können z.B. unterschiedliche Fahrzeug- und Aufbaulängen und Fahrzeugbreiten, unterschiedliche Fahrzeuggewichte, unterschiedliche Achsanordnungen etc. betreffen.

Die Längsträger können direkt mit einem Boden des Fahrzeugaufbaus bzw. des Fahrzeugs verbunden werden. Hierbei kann ein direkter Kontakt bestehen. Dies spart Gewicht und erleichtert die Montage. Der Boden kann dabei auch Kräfte aufnehmen und übertragen, insbesondere in Fahrzeuglängsrichtung. Das Fahrgestell kann traversenfrei ausgebildet sein, was zusätzlich Gewicht spart.

Für ein Anhängerfahrgestell mit Deichsel und Trägerchassis können die Längsträger der bevorzugt V-förmigen starren Deichsel und die parallelen Längsträger mit der aufgenommenen Achse des Trägerchassis in unterschiedlicher Weise miteinander und mit dem Boden des Aufbaus verbunden werden.

Die Längsträger der Deichsel und die Längsträger des Trägerchassis können dabei einen axialen Abstand in der Montagestellung am Fahrzeug bzw. am Boden des Aufbaus haben. Dies kann ein freier Abstand sein, wobei der Boden die Längskräfte zwischen Deichsel und Trägerchassis überträgt. In der Montagestellung sind die Deichsel und das Trägerchassis bzw. deren Längsträger noch nicht mit dem Boden des Aufbaus verbunden. Sie haben auch keine andere Verbindung miteinander durch ein Fahrgestellteil. Sie können durch die fehlende Verbindung in einen wählbaren freien axialen Abstand voneinander gebracht werden. Der freie axiale Abstand ist einstellbar und veränderbar. Wenn der gewünschte axiale Abstand gefunden ist, können die Deichsel und das Trägerchassis bzw. deren Längsträger mit dem Boden fest verbunden werden, der dann auch die besagten Längskräfte übertragen kann.

Der Freiraum bzw. axiale Abstand kann andererseits durch einen Längsverbinder überbrückt werden, der die distanzierten Längsträger von Deichsel und Trägerchassis in Längsrichtung miteinander verbindet. Dies ist eine sog. indirekte Verbindung der besagten Längsträger bzw. Deichsel- und Chassisholme. Der Längsverbinder ist dabei bevorzugt an den aufrechten Trägerwänden der axial anschließenden Längsträger angeordnet und mit diesen verbunden. Bei der indirekten Verbindung kann ebenfalls der besagte axiale Abstand bedarfsweise eingestellt und verändert werden.

Der besagte Boden kann dadurch auf den Deichsel- und Chassisholmen mit direktem Kontakt aufliegen und befestigt werden.

Außerdem können die Deichsel und das Trägerchassis getrennt voneinander am Fahrzeug bzw. Fahrzeugaufbau montiert und befestigt werden.

Diese Ausgestaltung und Anordnung der Längsträger bzw. Deichsel- und Chassisholme mit axialem Abstand und mit fehlender oder indirekter Verbindung hat eine eigenständige erfinderische Bedeutung. Sie kann auch bei anderen Längsträgern ohne die beanspruchte Gitterstruktur der Längsträger eingesetzt werden. Die eigenständig erfinderische Ausgestaltung und Anordnung betrifft auch die besagten anderen Längsträger von Fahrgestellen von Straßenfahrzeugen sowie diese Fahrgestelle und diese Straßenfahrzeuge.

In einer anderen Variante können die Längsträger der Deichsel direkt mit den Längsträgern des Trägerchassis verbunden werden. Die Verbindung kann jeweils lösbar, insbesondere geschraubt, oder dauerhaft, z.B. geschweißt oder geklebt sein. Ferner ist eine integrale und einstückige Ausbildung als durchgehender Längsträger ohne Verbindungsstelle möglich. Bei Einsatz eines Längsverbinders oder einer direkten Verbindung bzw. integralen Ausbildung der Längsträger von Deichsel und Trägerchassis kann der Aufbauboden entlastet werden.

Die Fahrgestelllänge kann z.B. variiert werden durch unterschiedliche Längsverbinder oder durch deren in Längsrichtung variable Verbindung mit den Trägerenden oder durch eine in Längsrichtung variable Direktverbindung der besagten Längsträger. Variierbar sind auch die Fahrgestellbreiten, die Deichsellängen, die Deichselwinkel etc.. Durch unterschiedliche Längsverbinder kann die Variantenbreite des Baukastensystems weiter gesteigert werden.

Die eigenständig erfinderische Ausführung mit fehlender oder indirekter Verbindung der Längsträger bzw. Deichsel- und Chassisholme ist hierfür besonders vorteilhaft und ermöglicht besonders große Verstellwege. Diese Ausführung ist auch für das Baukastensystem und dessen Effizienz besonders günstig.

Die gebotene Variabilität bietet auch Vorteile für die Montageoptimierung für variable Aufbaubedingungen, insbesondere für lageveränderliche Schwerpunkte des Aufbaus. Mit der Schwerpunktlage kann sich die am vorderen Deichselende wirkende Deichsellast oder Aufliegekraft verändern. Deren Höhe kann aus Zulassungsgründen oder dgl. vorgegeben sein.

Zur Kompensation von Schwerpunktverlagerungen kann die Lage der Achsanordnung in Fahrzeuglängsrichtung verändert werden, um die Deichsellast auf dem gewünschten Wert zu halten. Mit der beanspruchten Fahrgestelltechnik ist es möglich, diese Kompensation ohne eine aufwändige Berechnung der tatsächlichen und je nach Aufbau variierenden Schwerpunktlage vorzunehmen. Das Trägerchassis kann am Ende der Montagelinie in Axialrichtung am Fahrzeugboden bedarfsweise verschoben werden, bis die zugleich gemessene Deichsellast den gewünschten Wert hat.

Alternativ oder zusätzlich kann auch die Deichsel unter Veränderung der freien Deichsellänge in Längsrichtung relativ zum Aufbauboden verschoben werden. Die Verschiebung von Deichsel und/oder Trägerchassis gegenüber den am Aufbau- oder Fahrzeugboden meistens vorgegebenen Befestigungsstellen kann ermöglicht werden durch eine besondere Ausbildung der Befestigungsstellen an den betreffenden Längsträgern, insbesondere an deren oberen quer gerichteten Trägerwänden. Die Befestigungsstellen können z.B. als Bohrungen für bereits am Aufbauboden befindliche Steckschrauben ausgebildet sein. Für die Verschiebbarkeit können die Befestigungsstellen mehrfach und in einer Reihenanordnung unter Bildung eines Registers vorhanden sein. Sie können alternativ als Langloch mit Längsausrichtung ausgebildet und angeordnet sein.

Eine eventuelle Veränderung der Relativlage zwischen Deichsel und Trägerchassis kann bei einer Verbindung untereinander durch unterschiedliche Längsverbinder oder durch eine Variabilität der Verbindungsstellen, insbesondere in Form eines Registers, angepasst werden. Bei einem freien Abstand zwischen den Längsträgern von Deichsel und Trägerchassis ist eine Anpassung entbehrlich.

Bei der besagten Gitterstruktur der aufrechten Trägerwand mit einer Vielzahl von Wandöffnungen mit dazwischenliegenden schmalen Wandstegen können zumindest einige dieser Wandstege schräg zur Trägerlängsrichtung geneigt sein. Sie können außerdem eine Neigung in unterschiedlichen Richtungen, insbesondere in Richtung zum vorderen Trägerende sowie in Richtung zum hinteren Trägerende aufweisen. Durch die Schräglage der schmalen Wandstege können die am jeweiligen Längsträger auftretenden Kräfte und Spannungen optimal aufgenommen und übertragen werden. Die Wandstege können sich insbesondere entlang des Kräfte- und Spannungsverlaufs erstrecken. Die Gitterstruktur kann eine fachwerkartige Formgebung haben. Die Gitterstruktur kann netzartig sein. Einige Wandstege können einander kreuzen, wobei Stegknoten gebildet werden.

Die Wandöffnungen sind vorzugsweise Durchgangsöffnungen in der aufrechten Trägerwand. Die Wandöffnungen können eine unterschiedliche Form und Größe haben. Sie können auch eine unterschiedliche Ausrichtung haben. Gleichartige, z.B. im wesentlichen dreieckige, Wandöffnungen können abwechselnd entgegen gesetzt ausgerichtet sein. Der Flächenanteil der Wandöffnungen kann gleich oder größer als der Flächenanteil der Wandstege sein.

Bei der besagten Gitterstruktur sind zumindest einige Wandöffnungen übereinander angeordnet und haben zugleich eine teilweise Überlappung in Trägerlängsrichtung. Der dazwischen liegende schmale Trägersteg hat eine schräge Ausrichtung. In einer vorteilhaften Ausgestaltung haben einige Wandöffnungen eine im Wesentliche dreieckige Form und einige Wandöffnungen eine im Wesentliche viereckige Form. Die Wandöffnungen können gerade und/oder gebogene Öffnungsränder haben. Die Eckbereiche sind spannungsgünstig verrundet.

Einige Wandöffnungen, vorzugsweise alle Wandöffnungen haben einen Abstand vom unteren Rand der aufrechten Trägerwand. Hierdurch ergibt sich unterhalb der Wandöffnungen ein unterer massiver Randbereich der Trägerwand. Dies ist für die Übertragung von Zugkräften von Vorteil.

Einige Wandöffnungen in der aufrechten Trägerwand können in der Höhe bis zum oberen Rand der aufrechten Trägerwand reichen. Sie können außerdem noch seitlich in die obere quer gerichtete Trägerwand reichen. Hierdurch kann eine seitliche Ausnehmung am Rand bzw. an der Übergangsstelle zwischen dieser oberen, quer gerichteten Trägerwand und der aufrechten Trägerwand gebildet werden. Der Öffnungsquerschnitt und damit die Gewichtsersparnis kann durch eine solche Formgebung erhöht werden. Es ist aber auch möglich, dass alle Wandöffnungen mit Abstand unterhalb des oberen Rands der aufrechten Trägerwand enden. Hierbei kann zwischen den Wandöffnungen und dem besagten oberen Rand ein oberer massiver Randbereich an der aufrechten Trägerwand gebildet werden.

Die obere quer gerichtete Trägerwand kann entlang ihrer Längserstreckung an ein oder mehreren Stellen eine lokale einseitige oder beidseitige Taillierung aufweisen. Die Wandbreite wird dadurch an der linken und/oder rechten Seite verkleinert. Die Befestigungsmittel für die Montage am Aufbauboden befinden sich vorzugsweise in den nicht taillierten Bereichen der oberen quer gerichteten Trägerwand. Dies können auch Wandbereiche oberhalb eines Stegknotens der Gitterstruktur sein. Die obere quer gerichtete Trägerwand überträgt bei der vorherrschenden Biegebelastung Druckkräfte. Diese können über die Befestigungsmittel am Aufbauboden abgestützt und aufgenommen werden. Der mittragende Boden entlastet die obere quer gerichtete Trägerwand und ermöglicht gewichtssparende Taillierungen.

Die Gitterstruktur kann sich in mehrere Abschnitte oder Strukturabschnitte gliedern. Diese können unterschiedliche Strukturformen haben und können an unterschiedlichen Längsträgerbereichen angeordnet sein. Die Strukturformen können an die jeweiligen Längsträgerbereiche und die dortigen Anforderungen, insbesondere Belastungen oder Anbaute, angepasst sein.

Die Strukturgliederung kann in mehrere Haupt-Abschnitte und ggf. einen oder mehrere Neben-Abschnitte erfolgen. Über die einen oder mehrere Neben-Abschnitte kann z.B. eine Längenanpassung der Gitterstruktur an unterschiedliche Trägerlängen erfolgen. An einem Längsträger, z.B. einem Deichselholm, können z.B. stets die gleichen Haupt-Abschnitte mit bevorzugt gleicher Ausbildung und Lage vorhanden sein, wobei zur Längenanpassung ein oder mehrere Nebenabschnitte dazwischen angeordnet werden können. An den Enden des Längsträgers ist vorzugsweise jeweils ein Hauptabschnitt angeordnet. Ein Trägerholm kann ebenfalls eine Strukturgliederung der Gitterstruktur aufweisen. Ein Hauptabschnitt kann im Anbaubereich der Achse(n) und zumindest ein Nebenabschnitt vor und/oder hinter dem Hauptabschnitt angeordnet sein.

Durch die Gliederung der Gitterstruktur ergeben sich verschiedene Vorteile. Einerseits ist das Verhalten, insbesondere Belastungsverhalten, des längenvariablen Längsträgers bei den verschiedenen Fahrgestellvarianten einheitlich. Zudem bestehen fertigungstechnische Vorteile durch eine Vereinheitlichung und Mehrfachnutzung von Fertigungswerkzeugen. Trotz Baukastensystem und großer Variantenbreite können der Werkzeugaufwand reduziert und die Fertigungskosten minimiert werden.

Die Längsträger von Deichsel und/oder Trägerchassis können in ihrer Längserstreckung höhenvariabel sein. Sie können insbesondere am vorderen und hinteren Ende eine geringere Höhe als im mittleren Bereich aufweisen. Die einander zugekehrten Trägerenden können in der Höhe, bevorzugt von unten her, derart stark reduziert werden, dass sie eine schmale Laschenform mit bevorzugt parallelen oberen und unteren Rändern aufweisen. Dies ist günstig für eine direkte Verbindung der Längsträger.

Ein Trägerende eines Längsträgers, insbesondere eines Deichselholms, kann eine schräge Abwinklung bzw. sog. Abkröpfung aufweisen. Diese kann zur Winkelanpassung und/oder Längenverstellung der V-Deichsel relativ zum Trägerchassis dienen. Sie ist auch zur gegenseitigen Anlage und Befestigung von Deichselholm und Chassisholm von Vorteil. Die Abkröpfung kann ein oder mehrere Verbindungselemente, insbesondere ein Register von Verbindungselementen, aufweisen. Die Abkröpfung ist seitlich aus der Trägerhauptebene ausgebogen und zum Innenraum des Fahrgestells gerichtet. Die Abkröpfung kann insbesondere an einem laschenförmigen Trägerende angeordnet sein.

Eine Abkröpfung kann alternativ an einem Längsverbinder angeordnet sein. Die Lage der Abkröpfung am Längsverbinder kann variieren, insbesondere in dessen Längsrichtung. Die Abkröpfung kann dadurch z.B. näher am vorderen und zur Deichsel weisenden Ende oder näher am hinteren und zur Achse weisenden Ende angeordnet sein. Ferner kann der Kröpfungswinkel oder Biegewinkel variieren. Variabel ist auch die Länge der Längsverbinder.

Durch unterschiedliche Längsverbinder lassen sich eine Vielzahl unterschiedlicher Fahrgestellformen mit minimalem Aufwand herstellen. Die Variantenvielfalt ist auch bei einer Distanzierung oder einer Direktverbindung von Deichsel- und Chassisholmen möglich. Die Fahrgestellformen können z.B. in der Fahrgestellbreite, in der Fahrgestelllänge oder im Deichselwinkel variieren. Zusätzlich oder alternativ können die Längen der Längsträger, insbesondere der Deichselholme variieren, was die Variantenvielfalt der Fahrgestellformen ebenfalls vergrößert.

Durch die Erfindung lassen sich eine große Vielfalt unterschiedlicher Fahrgestelle mit geringem Aufwand herstellen. Mit Varianzteilen und ggf. Gleichteilen kann ein breites Baukastensystem geschaffen werden. Dies ist vorteilhaft, aber nicht unbedingt nötig.

Eine Varianz von Fahrgestellen kann auch mit minimalem Aufwand durch gleiche Längsträger, insbesondere Deichsel- und Chassisholme, und durch unterschiedliche gegenseitige Zuordnungen, insbesondere unterschiedliche Montageorte am Fahrzeugboden bzw. Aufbauboden, erreicht werden. Dabei können z.B. die Abstände der getrennt voneinander und ohne Verbindung montierten Längsträger in Längs- und Querrichtung verändert und unterschiedliche Längen und/oder Breiten des Fahrgestells realisiert werden.

Weitere Varianzmöglichkeiten bieten die veränderliche Gestaltung der modularen Längsträger, insbesondere Deichsel- und Chassisholme, und die evtl. Anordnung von Längsverbindern, wobei diese ebenfalls mannigfaltig variieren können, z.B. in ihrer Länge oder ihrer geraden oder gebogenen Form.

Bereits der Einsatz von variablen Längsverbindern bietet eine große Varianzbreite von Fahrgestellen. Dabei können die Längsträger, insbesondere Deichsel- und Chassisholme, auch Gleichteile sein, was den Aufwand minimiert. Die Längsverbinder sind kostengünstige Teile, die kostengünstig und mit wenig Lagerplatzbedarf variiert werden können.

Als Stellgrößen für die Variantenbreite der Fahrgestelle stehen grundsätzlich die Längsträger, insbesondere Deichsel- und Chassisholme, an sich, ihre gegenseitige Zuordnung mit oder ohne Verbindungsmöglichkeiten und die ggf. vorhandenen Längsverbinder zur Verfügung.

Die Längsträger von Deichsel und/oder Trägerchassis haben einen oberen Rand mit einer geraden Längserstreckung. Sie können einen unteren Rand mit einer geraden oder ausbauchenden Längserstreckung aufweisen. Die Ausbauchung ist unter lokaler Vergrößerung der Trägerhöhe nach unten gerichtet und hat eine vorzugsweise runde Form.

Die Längsträger können als dünnwandiges und abgekantetes bzw. abgebogenes Trägerprofil ausgebildet sein. Das Trägerprofil ist bevorzugt als offenes Profil mit einer z.B. U- oder C-förmigen Querschnittsgeometrie ausgebildet. Die Längsträger von Deichsel und/oder Trägerchassis können aus dem gleichen Material bestehen und eine gleiche Wanddicke aufweisen. Sie können alternativ bei Wanddicke und/oder Material Unterschiede haben. Vorzugsweise bestehen die Längsträger aus Metall, insbesondere aus Stahl. Das besagte Trägerprofil ist dabei als Blechprofil ausgebildet. Alternativ sind andere Werkstoffe, insbesondere auch Verbundmaterialien, möglich. Ein Trägerprofil kann ferner durch Verbindung, z.B. durch Schweißen, von aufrechten und liegenden Wandteilen gebildet werden.

Eine quer gerichtete Trägerwand, insbesondere die obere quer gerichtete Trägerwand, kann zumindest bereichsweise am freien Rand einen abwärtsgerichteten Flansch aufweisen. Dieser Flansch erhöht die Steifigkeit. Er kann eine über die Länge konstante oder variable Breite oder Abwärtserstreckung haben.

Der Längsträger von Deichsel und/oder Trägerchassis kann einstückig ausgebildet sein. Dies ist aus Belastungs- und Gewichtsgründen von Vorteil. Er kann alternativ mehrstückig ausgebildet sein.

Die aufrechte Trägerwand eines Längsträgers kann einen oder mehrere Versteifungsbereiche aufweisen. Ein solcher Versteifungsbereich kann von einem in Trägerlängsrichtung verbreiterten Wandsteg gebildet werden. Alternativ oder zusätzlich kann die Versteifung durch ein zusätzlich montiertes Versteifungsteil gebildet werden. Dieses kann z.B. plattenförmig sein. Es kann in beliebig geeigneter Weise mit der aufrechten Trägerwand verbunden werden, z.B. durch Schweißen, Schrauben oder dgl.. Der Versteifungsbereich kann eine Schnittstelle für ein Anbauteil aufweisen. Die Schnittstelle kann variabel sein und ein Register für Verbindungsmittel zur Befestigung des Anbauteils aufweisen.

Ein Anbauteil kann in beliebig geeigneter Weise ausgebildet sein. Es kann z.B. als abgewinkelter Stützbeschlag für den Aufbau ausgebildet sein. Ein solcher Stützbeschlag wird vorzugsweise an mindestens einem Deichselholm montiert und z.B. mit dem vorderen Bereich des Bodens bzw. des Aufbaus verbunden. Durch das Register sind unterschiedliche freie Deichsellängen erzielbar.

Alternativ oder zusätzlich kann ein Stützbeschlag für eine Verbindung mit dem Aufbau, insbesondere Aufbauboden, am hinteren Ende eines Deichselholms angeordnet sein. Dies kann eine benachbarte Verbindungsstelle zum Chassisholm versteifen und abstützen. Die Versteifung kann eine Querstrebe entbehrlich machen.

Ein anderes Anbauteil kann ein Stoßdämpfer, ein Niveauregler oder dgl. sein, wobei die Versteifung z.B. an einem Chassisholm nahe einer Achsaufnahme angeordnet sein kann. Ein Anbauteil kann ferner eine Hubstütze, eine Wagenheberaufnahme, ein Tank, ein Behälter oder ein Träger für eine Heizung, ein Ersatzrad oder dgl. sein.

Die aufrechte Trägerwand eines Längsträgers kann an einem Trägerende eine in Trägerlängsrichtung ausgerichtete Reihe von formschlüssigen Verbindungsmitteln aufweisen. Dies ist vorzugsweise eine einzelne Reihe. Durch die Reihenanordnung kann ein Register und eine Längsverstellbarkeit gebildet werden. Die aufgereihten Verbindungsmittel können insbesondere an einem laschenförmig verschmälerten Trägerende angeordnet sein.

Die Verbindungsmittel können in beliebig geeigneter Weise ausgebildet sein. Es kann sich insbesondere um napfartige kreisrunde oder längliche Wandverformungen handeln. Durch die Verbindungsmittel können die Trägerenden von Längsträgern der Deichsel und des Trägerchassis direkt per Formschluss und einer Verschraubung miteinander verbunden werden.

Alternativ können diese Längsträger mit dem jeweiligen Ende eines Zwischenträgers verbunden werden. Der Längsverbinder oder Zwischenträger hat entsprechende Verbindungsmittel, die auch in einer gleichen oder ähnlichen Reihenanordnung vorhanden sein können. Durch die Reihenanordnung und die Registerbildung ist eine Verstellbarkeit der Verbindungsstelle in Längsrichtung des Fahrgestells und der Längsträger möglich. Hierdurch können unterschiedliche Fahrgestelllängen oder auch freie Deichsellängen gebildet werden.

An der oberen quer gerichteten Trägerwand eines Längsträgers können ein oder mehrere Befestigungsmittel für eine direkte Verbindung mit einem Fahrzeugaufbau, insbesondere mit dessen Boden, angeordnet sein. An einem Längsträger können mehrere Befestigungsmittel in Trägerlängsrichtung verteilt und gruppenweise unter Bildung eines Registers für verschiedene axiale Anbaustellungen an einem Fahrzeugaufbau, insbesondere an dessen Boden angeordnet sein. Alternativ ist die vorerwähnte Ausbildung eines Befestigungsmittels als Langloch möglich.

Am Fahrgestell kann bedarfsweise ein Rangierantrieb angeordnet sein. Der Rangierantrieb kann mehrere Antriebseinheiten aufweisen, die einzeln oder zu mehreren auf die linken und rechten Räder einwirken. In einer Ausführungsform ist eine Antriebseinheit an einer Achse angeordnet. Sie kann insbesondere mit ihrem Motor in oder am Achskörper angeordnet sein und das zugeordnete Fahrzeugrad über einen Antriebsstrang, insbesondere einen Getriebezug, zentral antreiben. Die Achse kann als Lenkerachse mit einem Radschwinghebel ausgebildet sein, wobei der Antriebstrang sich entlang des Radschwinghebels, insbesondere im Innenraum von dessen Gehäuse, erstreckt. Die Radnabe kann auf einer zentralen Treibwelle angeordnet sein und über den Antriebstrang angetrieben werden. Ein solcher Rangierantrieb kann z.B. gemäß der DE 10 2017 104 747 A1 ausgebildet sein.

In einer anderen Ausführungsform kann eine Antriebseinheit außenseitig am Fahrgestell, insbesondere an der aufrechten Trägerwand der Chassisholme montiert werden, wobei ggf. eine stabilisierende Querstrebe zwischen den Chassisholmen angeordnet und dort mit ihren Enden innenseitig befestigt ist. Der Rangierantrieb kann vor oder hinter der zugeordneten Achse angeordnet sein.

Der Chassisholm kann an der aufrechten Trägerwand einen Versteifungsbereich vor und/oder hinter der Achse(n) aufweisen. Am Versteifungsbereich kann eine definierte Schnittstelle für den Anbau des Rangierantriebs vorhanden sein. Hier können auch andere Anbauteile montiert werden.

Für den Anbau der Antriebseinheit kann alternativ oder zusätzlich ein Anbaubeschlag vorgesehen sein. Dieser hat Vorteile für eine filigrane Gitterstruktur der aufrechten Trägerwand, die nur in einem eingeschränkten Maß Querkräfte aufnehmen kann.

Ein Anbaubeschlag für ein Anbauteil weist ein Lastaufnahmemittel auf, welches an der aufrechten Trägerwand angelegt und befestigt, z.B. angeklemmt werden kann. Das Lastaufnahmemittel kann eine angepasste und an der Gitterstruktur formschlüssig angreifende Formaufnahme aufweisen, mit der Kräfte in Trägerlängsrichtung am Längsträger abgestützt werden können. Das Lastaufnahmemittel kann außerdem an zumindest einer quer gerichteten Trägerwand, insbesondere an der oberen Trägerwand und dem dortigen Befestigungsmittel befestigt und abgestützt werden. Die Querkräfte können über den Längsträger und den Boden des Aufbaus gemeinsam aufgenommen werden.

Ferner ist es möglich, Anbauteile mittels eines Adapters an einem Längsträger, insbesondere eines Chassisholms, zu befestigen. Der Adapter kann seinerseits z.B. an einem Versteifungsbereich eines Längsträgers, ggf. mittels einer definierten Schnittstelle, montiert sein.

Der beanspruchte Längsträger und das hiervon gebildete Fahrgestell können folgende vorteilhafte Ausgestaltungsmerkmale haben, die einzeln oder in beliebiger Kombination miteinander benutzt werden können.

Die Wandöffnungen der Gitterstruktur können eine unterschiedliche Form und Größe aufweisen.

Einige, vorzugsweise alle Wandöffnungen der Gitterstruktur können einen Abstand vom unteren Rand der aufrechten Trägerwand aufweisen.

Einige Wandöffnungen der Gitterstruktur können in der Höhe bis zum oberen Rand der aufrechten Trägerwand und seitlich in die obere quer gerichtete Trägerwand reichen. Die Wandöffnungen können auch mit Abstand unterhalb des besagten oberen Rands enden und einen massiven oberen Randbereich bilden. Dieser kann versteifend wirken.

Einige zwischen Wandöffnungen ausgebildeten Wandstege der Gitterstruktur können einander an Stegknoten kreuzen.

Zumindest einige zwischen Wandöffnungen ausgebildeten Wandstege können eine Neigung in Richtung zum vorderen Trägerende und zumindest einige andere Wandstege können eine Neigung in Richtung zum hinteren Trägerende aufweisen.

Eine Schnittstelle an einem Verstärkungsbereich eines Längsträgers kann einzeln oder mehrfach, insbesondere in einem Register, angeordnet sein.

An der oberen quer gerichteten Trägerwand eines Längsträgers können ein oder mehrere Befestigungsmittel für eine direkte Verbindung mit einem Fahrzeugaufbau angeordnet sein.

An einem Längsträger können mehrere Befestigungsmittel für eine direkte Verbindung mit einem Fahrzeugaufbau in Trägerlängsrichtung verteilt und gruppenweise unter Bildung eines Registers für verschiedene axiale Anbaustellungen an einem Fahrzeugaufbau angeordnet sein. Alternativ oder zusätzlich kann ein Befestigungsmittel als Langloch ausgebildet sein.

Der Längsträger kann als Deichselholm einer Deichsel oder als Chassisholm eines Trägerchassis ausgebildet sein.

An einem als Deichselholm ausgebildeten Längsträger kann an dessen aufrechter Trägerwand ein Versteifungsbereich an einer Auflagerstelle für einen vorderen Randbereich eines Fahrzeugaufbaus angeordnet sein.

An einem als Chassisholm ausgebildeten Längsträger kann an dessen aufrechter Trägerwand ein Versteifungsbereich in der Nähe einer Achsaufnahme, insbesondere vor und/oder hinter der Achsaufnahme bzw. der Fahrzeugachse angeordnet sein.

Am Versteifungsbereich und an einer ggf. dortigen Schnittstelle eines als Chassisholm ausgebildeten Längsträgers können ein oder mehrere Anbauteile angeordnet sein. Ein Anbauteil kann z.B. als Stoßdämpfer, als Rangierantrieb, insbesondere als dessen Antriebseinheit, als Behälter, als Ersatzradhalter, als Wagenheberaufnahme, als Hubstütze oder dgl. ausgebildet sein.

Eine Antriebseinheit eines Rangierantriebs kann an der Achse oder an einer aufrechten Trägerwand eines Längsträgers angeordnet und abgestützt sein.

In einer Fahrgestellvariante mit einer Deichsel können die Längsträger der Deichsel und die Längsträger des Trägerchassis in Längs- oder Fahrtrichtung voneinander beabstandet sein, wobei sie in der besagten Weise nicht durch ein Fahrgestellteil miteinander verbunden sind. In einer anderen Ausführung können die Längsträger der Deichsel und die Längsträger des Trägerchassis in Längs- oder Fahrtrichtung verstellbar direkt oder indirekt mittels eines Längsverbinders miteinander verbunden sein.

Der Längsverbinder kann eine gerade oder gebogene Form, insbesondere eine Abkröpfung sowie ggf. eine Ausnehmung bzw. Einprägung, aufweisen.

An einem Längsträger kann ein Anbaubeschlag für ein Anbauteil angeordnet sein, der dessen aufrechte Trägerwand versteift und an einer quer gerichteten Trägerwand abgestützt und befestigt ist.

Ein Längsträger kann einen oberen Rand mit einer geraden Längserstreckung und einen unteren Rand mit einer geraden oder ausbauchenden Längserstreckung aufweisen.

Eine quer gerichtete Trägerwand eines Längsträgers, insbesondere die obere quer gerichtete Trägerwand, kann zumindest bereichsweise am freien Längsrand einen abwärts gerichteten Flansch aufweisen.

Eine quer gerichtete Trägerwand eines Längsträgers, insbesondere die obere quer gerichtete Trägerwand, kann zumindest bereichsweise eine einseitige oder beidseitige Taillierung aufweisen.

Das Trägerchassis kann als Anbauchassis für einen motorisierten Zugkopf eines Kraftfahrzeugs ausgebildet sein.

Das Fahrgestell kann eine mit dem Trägerchassis verbundene Deichsel aufweisen.

Der Fahrzeugaufbau eines Straßenfahrzeugs kann direkt und in Kontakt mit den Längsträgern verbunden sein.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: Einen Anhänger mit einem Fahrgestell mit Deichsel, Trägerchassis und Längsverbinder nebst Längsträgern in einer Seitenansicht,
- Figur 2:: eine perspektivische Draufsicht auf das Fahrgestell und den transparent dargestellten Aufbau von Figur 1 mit einer Variation mit und ohne Längsverbinder,
- Figur 3:: eine perspektivische Ansicht von Längsträgern einer Deichsel und eines Trägerchassis und mehreren Verbindungsmöglichkeiten mit direkter Verbindung oder indirekter Verbindung mittels Längsverbinder,
- Figur 4:: eine perspektivische Ansicht eines Trägerchassis mit einer Achse und Längsverbindern,
- Figur 5:: eine Draufsicht auf das Trägerchassis von Figur 4 mit Darstellung von Anbaumöglichkeiten für einen Rangierantrieb und einen Behälter,
- Figur 6:: eine abgebrochene und vergrößerte Seitenansicht eines Längsträgers mit einem Anbaubeschlag,

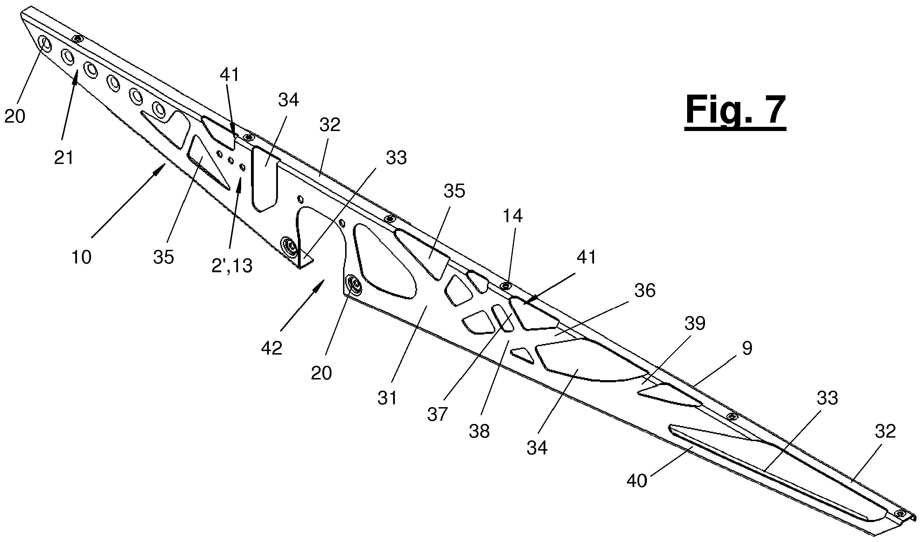

- Figur 7:: eine perspektivische Ansicht eines Längsträgers für ein Trägerchassis,
- Figur 8:: eine abgebrochene und vergrößerte Detailansicht eines vorderen Endes des Längsträgers von Figur 7,
- Figur 9:: einen Längsträger einer Deichsel in einer perspektivischen Ansicht,
- Figur 10 bis 12:: eine in mehrere Abschnitte gegliederte Gitterstruktur in mehreren Varianten,
- Figur 13 bis 16:: ein Baukastensystem mit verschiedenen Fahrgestellformen,
- Figur 17:: eine Fahrgestellvariante in perspektivischer Ansicht,
- Figur 18:: einen vergrößerten Ausschnitt des Fahrgestells von Figur 17,
- Figur 19:: einen abgewandelten Längsverbinder,
- Figur 20 und 21:: eine weitere Fahrgestellvariante in perspektivischer Ansicht und in Seitenansicht,
- Figur 22:: einen vergrößerten Ausschnitt der Deichsel der Fahrgestellvariante von Figur 20,
- Figur 23:: einen vergrößerten Ausschnitt des Trägerchassis der Fahrgestellvariante von Figur 20,
- Figur 24 und 25:: die Fahrgestellvariante von Figur 20 mit Anbauteilen in perspektivischer Ansicht und in Draufansicht,
- Figur 26:: eine Abwandlung der Anordnung der Anbauteile von Figur 24 in einem vergrößerten Ausschnitt,
- Figur 27:: ein Baukastensystem der Fahrgestellvariante von Figur 20,
- Figur 28 und 29:: eine Strukturgliederung bei Chassisholmen,
- Figur 30:: eine weitere Fahrgestellvariante mit Anbauteilen in perspektivischer Ansicht und
- Figur 31:: eine perspektivische Innenansicht der Längsträger von Figur 30.

Die Erfindung betrifft einen Längsträger (8,9) für ein Fahrgestell (2). Die Erfindung betrifft ferner das mit ein oder mehreren Längsträgern (8,9) ausgerüstete Fahrgestell (2) sowie ein Straßenfahrzeug (1) mit einem solchen Fahrgestell (2). Die Erfindung betrifft außerdem einen Anbaubeschlag (28) und ein Verfahren zur Montage eines Fahrgestells (2) an einem Fahrzeugaufbau (3), insbesondere an dessen Boden. Die Erfindung ist ferner auf ein Baukastensystem (55) für das Fahrgestell (2) bezogen.

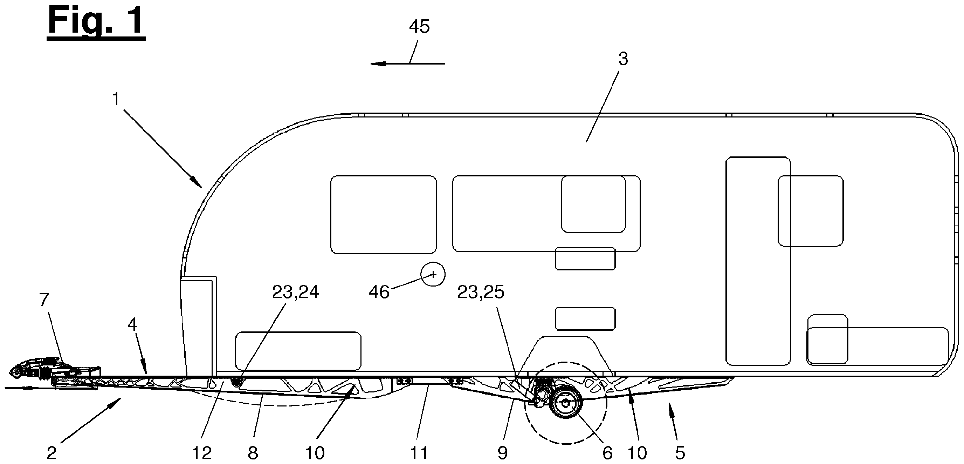

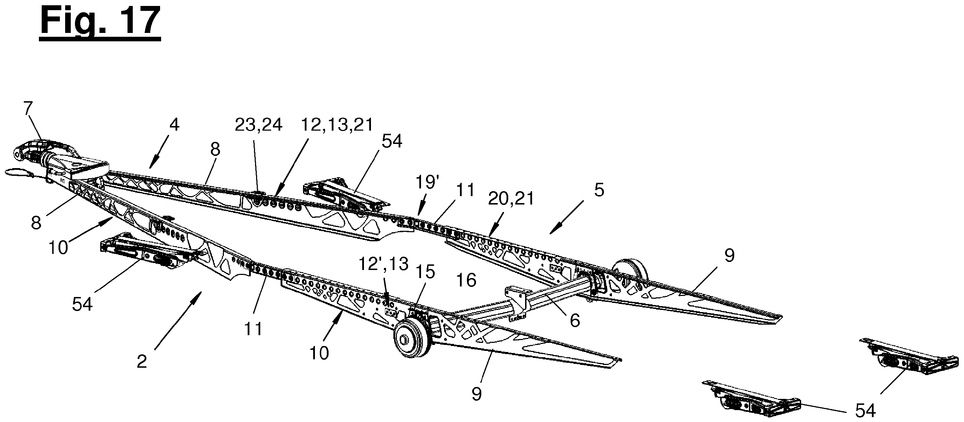

Figur 1 zeigt ein Fahrzeug mit einem Fahrgestell (2) und einem Fahrzeugaufbau (3). Das Fahrzeug (1) ist vorzugsweise ein Straßenfahrzeug, z.B. der gezeigte Anhänger. In einer anderen und nicht dargestellten Varianten kann das Straßenfahrzeug (1) ein Kraftfahrzeug sein. Die Längsrichtung oder Fahrtrichtung (45) ist mittels Pfeil angegeben. Figur 17 bis 19 zeigen eine Variante des Fahrgestells (2).

Der Fahrzeugaufbau (3) kann von beliebiger Art und Größe sein. In Figur 1 ist der Aufbau eines Wohnmobils oder Wohnwagens dargestellt. Alternativ kann es sich um den Fahrzeugaufbau (3) eines Nutzfahrzeugs handeln, z.B. einen Pritschenaufbau, Kastenaufbau, Tankaufbau oder dgl..

Der Fahrzeugaufbau (3) hat einen Boden, der auf dem Fahrgestell (2) aufliegt und mit diesem in geeigneter Weise über Befestigungsmittel verbunden ist. Die Befestigungsmittel des Fahrzeugaufbaus (3) können formschlüssig und als z.B. Schrauben ausgebildet sein sein, deren Köpfe im oder am Aufbauboden befestigt sind, z.B. durch Einlaminieren. Die Schraubenschäfte mit dem Gewinde ragen vertikal nach unten. Die aufbauseitigen Befestigungsmittel sind der Übersicht halber nicht dargestellt. Statt der Schrauben können beliebige andere Befestigungsmittel, z.B. Steckbolzen, Schraubmuttern oder dgl. vorhanden sein.

Am Fahrgestell (2) sind hierzu passende Befestigungsmittel (14) angeordnet. In den gezeigten Ausführungsbeispielen sind dies Bohrungen für die Aufnahme der Schraubenschäfte. Die Verbindung kann mit Schraubmuttern bei der Montage des Straßenfahrzeugs (1) gesichert werden.

Das Fahrgestell (2) weist mehrere Längsträger (8,9) auf. Von Querträgern wird vorzugsweise abgesehen. Alternativ können solche vorhanden sein.

Das Fahrgestell (2) weist für den gezeigten Anhänger (1) eine frontseitige Deichsel (4) und ein rückwärtiges Trägerchassis (5) mit mindestens einer Achse (6) auf. In der gezeigten Ausführungsform ist die Achse (6) eine Einzelachse. Alternativ kann die Achse (6) mehrfach vorhanden sein unter Bildung einer Tandemachse, Tripelachse oder dgl.. Das Fahrzeugrad ist in Figur 1 gestrichelt dargestellt. Das Fahrgestell (2) kann ferner eine Bremseinrichtung mit Radbremsen aufweisen.

Die Deichsel (4) ist als starre und V-förmige Deichsel ausgebildet. Sie weist schräg zueinander ausgerichtete Längsträger (8) auf, die auch als Deichselholme bezeichnet werden. Am vorderen Ende weist die Deichsel (4) eine Kupplungseinrichtung (7) mit einer Fahrzeugkupplung und ggf. Teilen einer Bremseinrichtung, insbesondere einer Auflaufeinrichtung, einem Handbremshebel oder dgl., auf. An der Deichsel (4) wird der vordere Rand des Fahrzeugaufbaus (3) und ggf. auch ein nachfolgender Aufbaubereich abgestützt und befestigt. Hierfür sind nachfolgend erläuterte Stützbeschläge (24,24') vorgesehen. An der Deichsel (4) können weitere Komponenten, z.B. ein Stützrad, eine Deichselhaube, eine Aufnahme für Gasflaschen oder dgl. angeordnet und montiert sein.

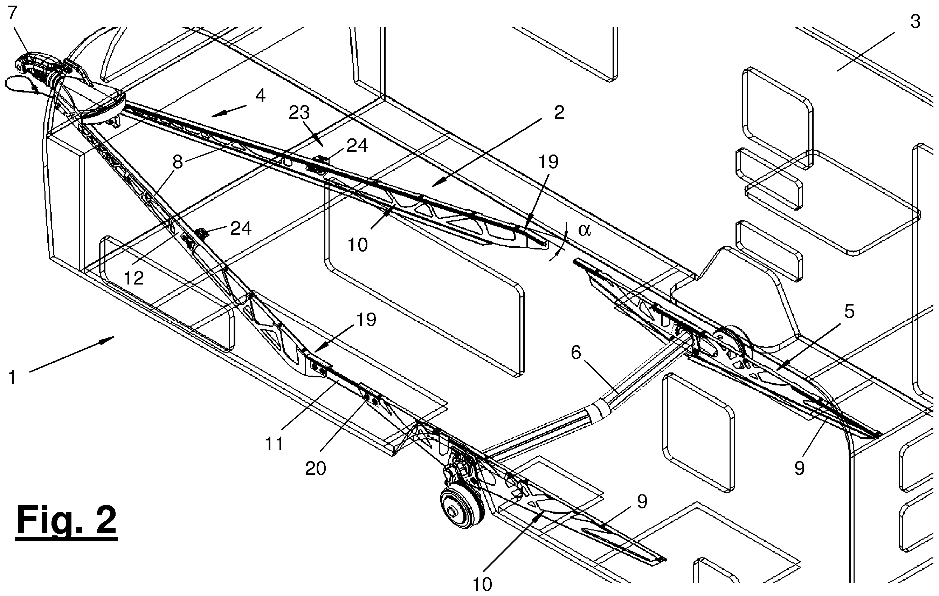

Das Trägerchassis (5) weist gemäß Figur 2 zwei parallele Längsträger (9) auf, die auch als Chassisholm bezeichnet werden. Die Längsträger (9) tragen mittels einer Achsaufnahme (42) die einzeln oder mehrfach vorhandene Achse (6).

Die Längsträger (8,9) haben an der Oberseite eine ebene Oberfläche, auf der im montierten Zustand der Aufbauboden direkt aufliegt und befestigt wird.

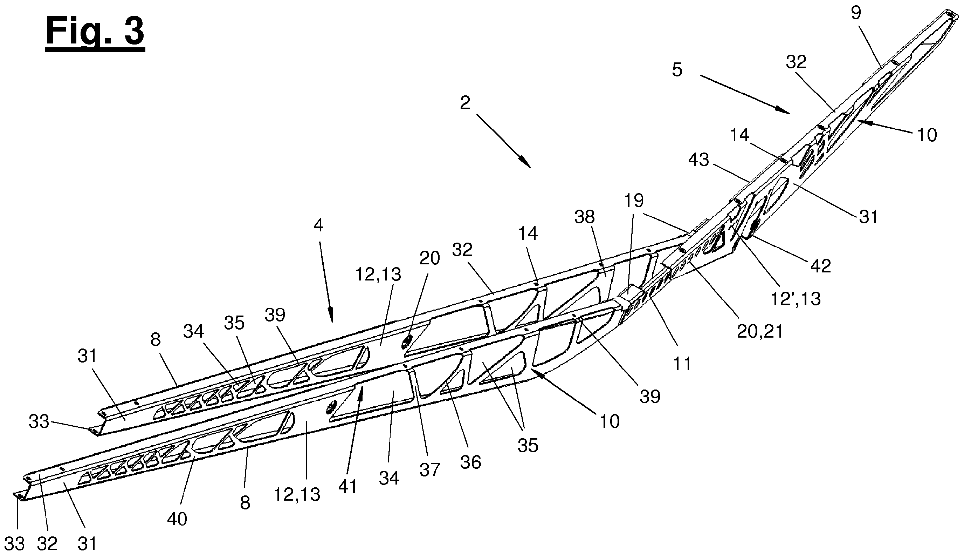

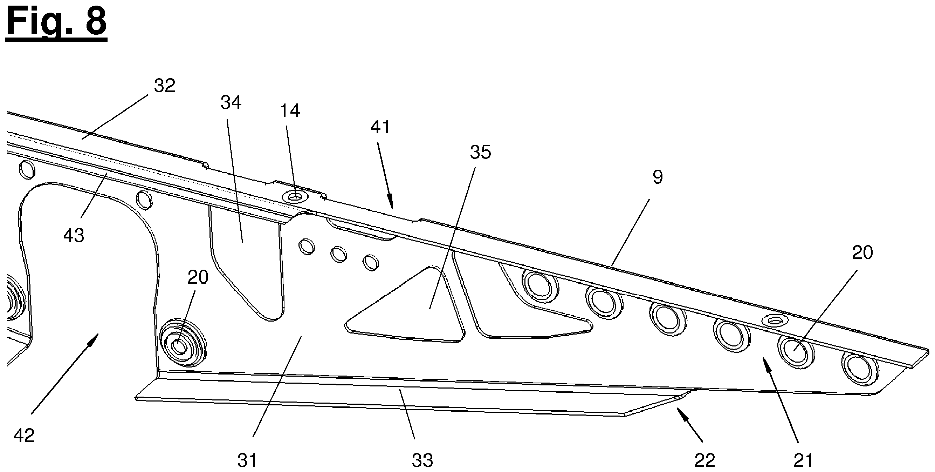

Die Längsträger (8,9) von Deichsel (4) und/oder Trägerchassis (5) haben eine profilierte Querschnittsform, die z.B. aus Figur 3 und 8 ersichtlich ist. Sie weisen eine in Trägerlängsrichtung laufende aufrechte und dünnwandige einzelne Trägerwand (31) auf mit einer an ihrem oberen und/oder unteren Längsrand angeordneten, quergerichteten Trägerwand (32,33). Die Richtungsangaben aufrecht und quer beziehen sich auch die Betriebs- und Einbaulage der Längsträger (8,9) am Fahrgestell (2) bzw. am Fahrzeug (1).

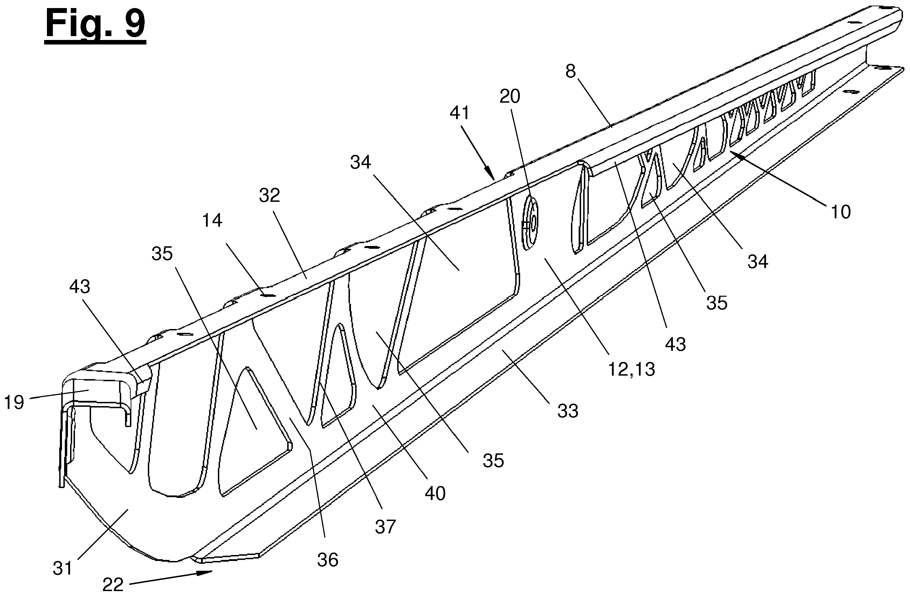

Die Längsträger haben zumindest bereichsweise ein U-förmiges Querschnittsprofil. Zumindest eine quergerichtete Trägerwand (32,33), insbesondere die obere Trägerwand (32), kann zumindest bereichsweise an ihrem freien Rand einen nach unten gerichteten Flansch (43) aufweisen. Figur 8 und 9 verdeutlichen diese Ausbildung. Der Flansch (43) kann über seine Länge eine konstante oder variierende Breite bzw. Erstreckung nach unten aufweisen. In den gezeigten Ausführungsformen ragen die ein oder mehreren quer gerichteten Trägerwände (32,33) von ihrer aufrechten Trägerwand (31) jeweils zur Innenseite des Fahrgestells (2) .

Die Längsträger (8,9) sind vorzugsweise einstückig ausgebildet. Sie können als Trägerprofile aus einem beliebig geeigneten Material, insbesondere aus Metall, vorzugsweise Stahl, ausgebildet sein. Sie können insbesondere als Stanz- und Biegeteile ausgeführt sein. Sie können auch als gebogene Laserschnittteile, insbesondere Bleche, ausgeführt sein. Die Trägerwände (31,32,33) können miteinander einteilig verbunden sein, wobei die jeweilige quergerichtete Trägerwand (32,33) nebst Flansch (43) durch Abbiegen oder Abkanten von der aufrechten Trägerwand (31) gebildet werden. Die Materialien und/oder Wanddicken der Längsträger (8,9) können gleich oder unterschiedlich sein.

Die Längsträger (8,9) haben in Längsrichtung gesehen eine variable Höhe. Die Trägerhöhe ist am vorderen und hinteren Trägerende kleiner als im mittleren Bereich. Am vorderen und/oder hinteren Trägerende kann die untere quergerichtete Trägerwand (33) unter Bildung einer Ausklinkung (22) verkürzt sein. Der Deichselholm (8) kann am rückwärtigen Trägerende eine seitlich aus der aufrechten Trägerwandebene abgebogene Abkröpfung (19) aufweisen. Das Trägerende ist dabei seitlich abgewinkelt. Der in Figur 2 gezeigte Biegewinkel α kann z.B. zwischen 10° und 20° liegen. Günstig ist eine Winkelgröße zwischen 13° bis 17°. Die Abkröpfung (19) ist bevorzugt zur Innenseite des Fahrgestells (2) gerichtet.

Die Längsträger (8,9) haben einen oberen Rand mit einer geraden Längserstreckung und einen unteren Rand mit einer bevorzugt geraden Längserstreckung. In Figur 1 ist gestrichelt eine Alternative dargestellt, bei der ein Längsträger, insbesondere ein Deichselholm (8), am unteren Rand im mittleren Bereich eine nach unten ausbauchende und die Trägerhöhe lokal vergrößernde Längserstreckung haben kann.

Die aufrechte Trägerwand (31) der Längsträger (8,9) weist eine Gitterstruktur (10) mit einer Vielzahl von Wandöffnungen (34,35) und mit schmalen Wandstegen (36,37) zwischen den Wandöffnungen (34,35) auf. Die Wandöffnungen (34,35) sind Durchgangsöffnungen in der Trägerwand (31). Die Trägerwand (31) weist die Gitterstruktur (10) fast über ihre gesamte Länge, zumindest am größten Teil ihrer Länge, auf.

Die Wandöffnungen (34,35) haben eine unterschiedliche Form und Größe. In einer anderen Variante können Form und Größe der Wandöffnungen (34,35) gleich sein, z.B. unter Bildung einer wabenartigen Gitterstruktur. Die Anordnung und Form der Wandöffnungen (35) am vorderen Ende der Deichselholme (8) kann sich z.B. über die Länge der Deichselholme (8) fortsetzen. Sie kann in gleicher oder entsprechender Weise auch bei den Chassisholmen (9) vorhanden sein.

In den gezeigten Ausführungsformen haben einigen Wandöffnungen (35) eine im Wesentlichen dreieckige Form. Einige andere Wandöffnungen (34) können eine abweichende, z.B. im Wesentlichen viereckige oder fünfeckige, Form haben. Die Öffnungsränder können einen gerade oder gebogenen Verlauf haben. Die Eckbereiche sind verrundet.

Die gegenseitige Ausrichtung gleichartiger Wandöffnungen (35,34) kann variieren. Am vorderen Endbereich der Deichselholme (8) sind gegeneinander gerichtete dreieckige Wandöffnungen (35) abwechselnd angeordnet.

Bei der gezeigten Gitterstruktur (10) ist der Flächenanteil der Wandöffnungen (34,35) gleich oder größer als der Flächenanteil der Wandstege (36,37). Die Längsträger (8,9) bauen dadurch besonders leicht.

Bei den gezeigten Ausführungsformen sind zumindest einige Wandöffnungen (34,35) in Vertikalrichtung übereinander angeordnet. Dabei haben sie in Trägerlängsrichtung eine teilweise Überlappung.

Zumindest einige der Wandstege (36,37) sind schräg zur Trägerlängsrichtung geneigt. Sie haben dabei eine Neigung in unterschiedlichen Richtungen. Zumindest einige Wandstege (37) sind in Richtung zum jeweiligen vorderen Trägerende ihres Längsträgers (8,9) geneigt. Zumindest einige andere Wandstege (36) haben eine Neigung in Richtung zum jeweiligen hinteren Trägerende. Die Zuordnung vorne/hinten bezieht sich auf die in Figur 1 mit einem Pfeil dargestellte Längsrichtung oder Fahrtrichtung (45) des Fahrzeugs (1) bzw. auf die Front und das Heck des Fahrzeugs (1).

Einige Wandstege (36,37) kreuzen einander unter Bildung von Stegknoten (38). An diesen Stellen ist die tragende Fläche der aufrechten Trägerwand (31) vergrößert.

Die Wandöffnungen (34,35) haben jeweils einen Abstand vom unteren Rand der aufrechten Trägerwand (31). Hierdurch wird ein massiver unterer Randbereich (40) der aufrechten Trägerwand (31) gebildet. An diesen Rand schließt sich die untere querliegende Trägerwand (33) an. Die Wandöffnungen (34,35) können auch einen Abstand vom oberen Rand der aufrechten Trägerwand (31) aufweisen, wodurch ein massiver oberer Randbereich (39) der aufrechten Trägerwand (31) gebildet wird.

Einige Wandöffnungen (34,35) können in der Höhe vertikal nach oben bis zum oberen Rand der aufrechten Trägerwand (31) ragen und reichen auch seitlich in die obere quer gerichtete Trägerwand (32) hinein reichen. Hierdurch wird eine Ausnehmung an der Übergangsstelle und am Rand der Trägerwand (33) gebildet. Dabei wird auch eine lokale seitliche Taillierung (41) an der oberen quer gerichten Trägerwand (32) gebildet. Die Wandbreite ist bei der Taillierung (41) einseitig oder beidseitig verkleinert. Figur 8 zeigt beispielhaft eine solche Ausbildung. Im Bereich eines Flansches (43) ist die Taillierung (41) einseitig. An einem Trägerende kann der Flansch (43) entfallen oder ausgespart sein. Hierdurch kann sich eine beidseitige Taillierung (41) bilden.

Die Befestigungsstellen (14) sind an der oberen quer gerichteten Trägerwand (32) angeordnet. Sie befinden sich dort in verbreiterten Wandbereichen. Diese liegen außerhalb einer Taillierung (41). Sie können sich oberhalb eines Stegknotens (38) befinden.

Die aufrechte Trägerwand (31) eines Längsträgers (8,9) kann einen oder mehrere Versteifungsbereiche (12) mit einem in Trägerlängsrichtung verbreiterten Wandsteg aufweisen. Am Versteifungsbereich (12) können eine oder mehrere Schnittstellen (13) für ein Anbauteil (23) angeordnet sein. Der Wandsteg kann im Versteifungsbereich (12) im wesentlichen massiv bzw. vollwandig sein.

Bei einem Deichselholm (8) befindet sich z.B. ein Versteifungsbereich (12) im mittleren Deichselbereich und liegt in Montagestellung unter dem vorderen Bereich des Fahrzeugaufbaus (3). Das Anbauteil (23) ist in diesem Fall z.B. als abgewinkelter Stützbeschlag (24) ausgebildet, der mit einem horizontalen Flansch einseitig oder beidseitig vom Längsträger (8) den Aufbauboden abstützt und hier befestigt ist.

Die Schnittstelle (13) kann ein oder mehrere Verbindungsmittel (20) zur Befestigung des Anbauteils (23), insbesondere Stützbeschlags (24), aufweisen. Dies können formschlüssige Verbindungsmittel, insbesondere napfartige kreisrunde oder längliche Wandverformungen, sein. Figur 9 verdeutlicht diese Ausbildung. Alternativ kann ein Verbindungsmittel (20) als einfache Durchgangsöffnung in einem unverformten Wandstegbereich ausgebildet sein. Am Versteifungsbereich (12) können mehrere Verbindungsmittel (20) in einer Reihe in Längsrichtung (45) hintereinander angeordnet sein. Sie bilden ein Register (21) oder eine Rasteranordnung für eine ortsveränderlicher Montage eines Anbauteils (23). Hierdurch kann z.B. der vordere Aufbaurand axial verschoben und die freie Deichsellänge verändert werden.

Am Chassisholm (9) kann ebenfalls ein Versteifungsbereich (12') vorhanden sein. Dieser befindet sich z.B. in der Nähe der Achse (6) und kann ebenfalls eine oder mehrere definierte Schnittstellen (13) aufweisen. Das hier zu montierende Anbauteil (23) kann z.B. ein Stoßdämpfer (25), ein Niveauregler, eine Hubstütze oder dgl. sein. Ein Versteifungsbereich (12',12") kann an einem Längsträger (8,9) auch mehrfach und an anderer Stelle vorhanden sein.

Die aufrechte Trägerwand (31) von einem Längsträger (8,9) kann an einem Trägerende eine in Trägerlängsrichtung ausgerichtete einzelne Reihe von formschlüssigen Verbindungsmitteln (20) der vorgenannten Art aufweisen. Hierdurch kann ebenfalls ein Register (21) gebildet werden. Die Verbindungsmittel (20) können für eine direkte oder indirekte Verbindung von Längsträgern (8,9), insbesondere von Deichselholmen und Chassisholmen, dienen. Bei einem Deichselholm (8) können die Verbindungsmittel (20) z.B. an der Abkröpfung (19) angeordnet sein.

Wie Figur 1 bis 3 verdeutlichen, können die Deichselholme (8) und die Chassisholme (9) in unterschiedlicher Weise am Aufbauboden montiert werden. Sie können dabei direkt oder indirekt in Längsrichtung (45) miteinander verbunden werden. Es ist aber auch möglich, ohne eine solche Verbindung auszukommen.

Figur 2 zeigt in der oberen Bildhälfte die letztgenannte Variante, bei der die Deichselholme (8) und Chassisholme (9) jeweils einzeln für sich und mit einem gegenseitigen axialen Abstand am Aufbau- oder Fahrzeugboden montiert sind. In diesem Fall gibt es keine axiale Verbindung zwischen den Längsträgern (8,9). Durch den gezeigten freien axialen Abstand besteht eine offene Lücke zwischen der Deichsel (4) und dem Trägerchassis (5) bzw. zwischen den Deichselholmen (8) und Chassisholmen (9). Die Längskräfte werden über den besagten Boden übertragen.

Figur 2 zeigt in der unteren Bildhälfte die Variante mit einer mittelbaren bzw. indirekten axialen Verbindung der Deichselholme (8) und Chassisholme (9) mittels eines Längsverbinders (11). Dieser ist an den aufrechten Trägerwänden (31) der Deichselholme (8) und Chassisholme (9) angeordnet und mit diesen fest verbunden. Der Längsverbinder (11) fungiert als Zwischenträger und überträgt die in Längsrichtung (45) wirkenden Zug- und Druckkräfte im Fahrbetrieb. Diese Ausführung ist auch in Figur 1 und in der einen Variante von Figur 3 dargestellt.

Der Längsverbinder (11) ist z.B. als gerades Profilteil ausgebildet und weist seinerseits eine Reihe von formschlüssigen Verbindungsmitteln (20), insbesondere napfartigen kreisrunden oder länglichen Wandverformungen, auf. Diese korrespondieren mit den gleichartigen Verbindungsmitteln (20) an den einander zugekehrten Trägerenden von Deichselholm (8) und Chassisholm (9). In einer anderen Ausführung kann die Abkröpfung (19) am Deichselholm (8) entfallen, der dann ein gerades Trägerende aufweist. Stattdessen kann der Längsverbinder (11) eine abgebogene Form, insbesondere eine Abkröpfung (19'), zur Aufnahme des Winkelunterschieds der Längsträger (8,9) aufweisen. Figur 17 bis 19 zeigen diese nachfolgend beschriebene Variante.

Die aufeinander angepassten Wandverformungen der Verbindungsmittel (20) greifen formschlüssig ineinander und können mit einer durchgesteckten Schraube miteinander verspannt werden. Durch die Reihenanordnung der Verbindungsmittel (20) sind unterschiedliche Verbindungsstellen und Abstände zwischen den Längsträgern (8,9) möglich.

Figur 3 zeigt in der anderen Variante auch die Möglichkeit einer direkten Verbindung von Deichselholm (8) und Chassisholm (9) mittels der an den Trägerenden angeordneten formschlüssigen Verbindungsmittel (20). Die Abkröpfung (19) am hinteren Ende des Deichselholms (8) kann dabei seitlich an den Chassisholm (9) angelegt werden. Die Ausklinkung (22) ist für beide Varianten der direkten und indirekten Verbindung von Vorteil.

In Abwandlung der gezeigten Ausführungsform kann die mittelbare oder unmittelbare Verbindung der Längsträger (8,9) auch auf andere Weise als durch die formschlüssigen Verbindungsmittel (20) bewirkt werden. Dies ist z.B. durch eine stoffschlüssige Verbindung, insbesondere Schweißen oder Kleben möglich.

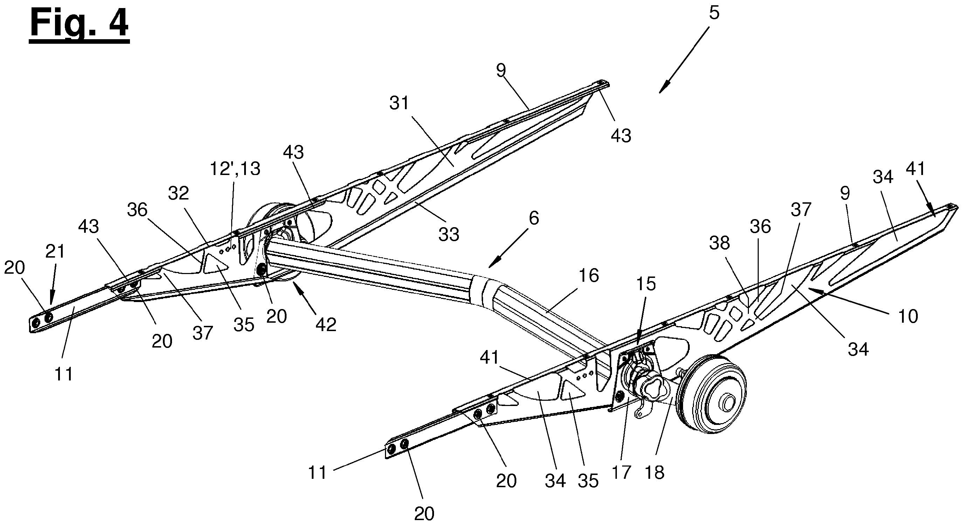

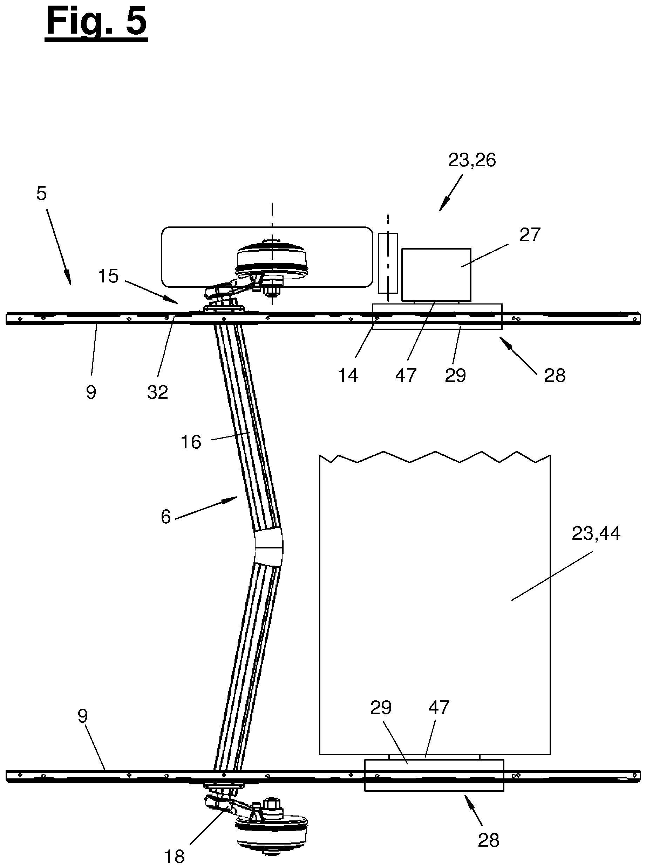

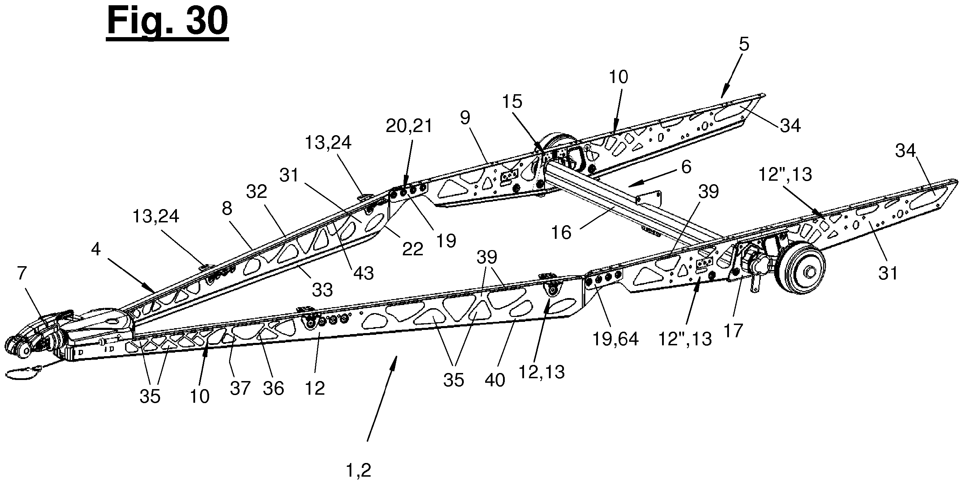

Figur 4 bis 6 verdeutlichen den Anbau einer Achse (6) und evtl. anderer Anbauteile (23) am Fahrgestell (2), insbesondere am Trägerchassis (5). Die Achse (6) kann einzeln oder mehrfach vorhanden sein. Sie ist bevorzugt als Lenkerachse ausgebildet und weist einen bevorzugt hohlen Achskörper (16) mit einem an zumindest einem Ende drehbar am Achskörper (16) gelagerten Radschwinghebel (18) auf. Der Radschwinghebel (18) trägt am freien Ende eine Radnabe und ggf. auch eine Radbremse. In der gezeigten Ausführungsform von Figur 5 ist die Achse (6) als Schräglenkerachse mit einem pfeilförmigen Achskörper (16) ausgebildet. Sie kann alternativ eine Längslenkerachse mit einem geraden Achskörper (16), z.B. gemäß Figur 30, sein. Die Achse (6) kann eine nicht dargestellte Federung aufweisen, z.B. eine achsinterne Gummi- oder Drehstabfederung, eine externe Schrauben- oder Luftfederung oder dgl..

Die Achse (6) kann in der gezeigten Ausführungsform als durchgehende Achse ausgebildet sein, bei der sich der Achsträger (16) über die gesamte Fahrgestellbreite erstreckt und an beiden Enden einen Radschwinghebel (18) aufweist. Alternativ ist eine Ausbidung als Stummelachse oder Halbachse mit einem verkürzten Achsträger (16) und einem nur einseitigen Radschwinghebel (18) möglich.

Die Achse (6) ist in geeigneter Weise mittels eines Achsträgers (15) mit einem oder beiden Chassisholmen (9) verbunden. Der Achsträger (15) kann z.B. von einem Trägerschild (17) an ein oder beiden Enden des Achskörpers (16) gebildet werden. Der Trägerschild (17) wird an einer Achsaufnahme (42) eines Längsträgers (9) montiert. Der Achskörper (16) wird dabei in einen Ausschnitt der aufrechten Trägerwand (31) eingeführt und der Trägerschild (17) an der Trägerwand (31) in geeigneter Weise befestigt, z.B. mittels der besagten formschlüssigen Verbindungsmittel (20). Die Achse (6) kann auch auf andere Weise, z.B. durch eine Schweißverbindung, mit einem oder mehreren Chassisholmen (9) verbunden werden.

Für die Anordnung von ein oder mehreren Anbauteilen (23) innen- oder außenseitig am Fahrgestell (2), insbesondere am Trägerchassis (5), können ein oder mehrere Anbaubeschläge (28) vorhanden und montiert sein.

Ein Anbauteil (23) kann z.B. ein ggf. nachzurüstender Rangierantrieb (26) sein. Dieser weist zwei oder mehr beidseits außenseitig an den Längsträgern (9) anzuordnende Antriebseinheiten (27) auf, die auf ein Fahrzeugrad treibend einwirken. Die Antriebseinheiten (27) weisen dafür jeweils eine am Reifen oder an der Felge treibend angreifende Antriebsrolle und einen Antriebsmotor für den drehenden Antrieb sowie einen Zustellantrieb für die Zustellung der Antriebsrolle nebst zugehörigen Getriebe auf. Eine solche Antriebseinheit (27) kann z.B. an der Außenseite eines Längsträgers (9) angeordnet und mittels eines Anbaubeschlags (28) befestigt werden.

Ein anderes Anbauteil (23) kann z.B. gemäß Figur 5 ein Behälter oder Träger (44), z.B. ein Tank, eine Ersatzradhalterung oder dgl. sein. Ein solches Anbauteil (23) kann z.B. im Innenbereich des Fahrgestells (2) zwischen den Längsträgern (9) angeordnet werden. Es kann ebenfalls mittels eines Anbaubeschlags (28) an einem oder beiden Längsträgern (9) befestigt werden.

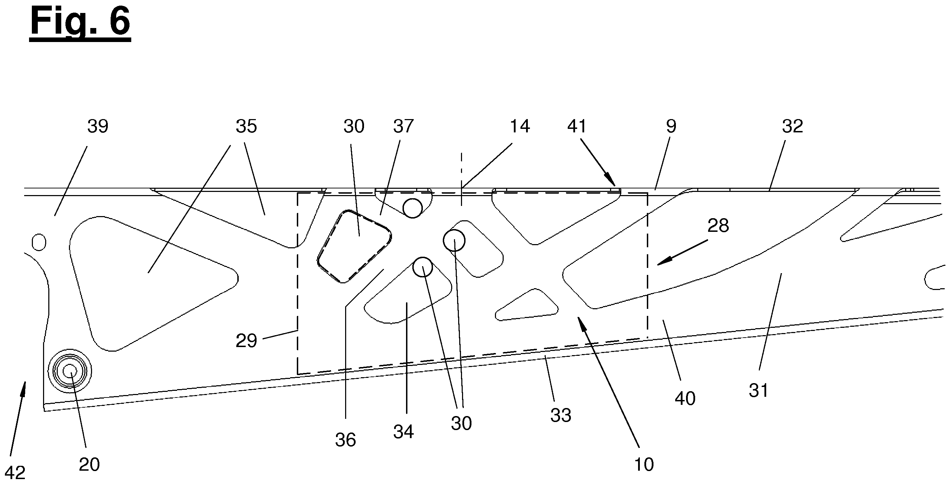

Ein Anbaubeschlag (28) ist in Figur 6 schematisch dargestellt. Er weist ein Lastaufnahmemittel (29) auf, welches an der aufrechten Trägerwand (31) anliegt und eine Formaufnahme (30) besitzt, die an die gelochte aufrechte Trägerwand (31), insbesondere an deren Gitterstruktur (10), formschlüssig angepasst ist. Die Formaufnahme (30) ist zur Anlage und Abstützung an der aufrechten Trägerwand (31) vorgesehen und ausgebildet.

Das Lastaufnahmemittel (29) kann z.B. von zwei platten- oder rahmenartigen Aufnahmeteilen gebildet werden, die beidseitig an die aufrechte Trägerwand (31) mit Berührungskontakt angelegt werden und miteinander durch Schrauben oder dgl. verbunden werden. Hierdurch kann die Trägerwand (31) beidseits eingespannt werden. Die Aufnahmeteile können dabei auch formschlüssig zur gegenseitigen Abstützung ineinander greifen.

Die Formaufnahme (30) dient zum formschlüssigen Angriff an der Gitterstruktur (10), d.h. an den Wandstegen (36,37) und/oder den Wandöffnungen (34,35). Die Formaufnahme (30) kann z.B. von Stiften gebildet werden, die an den Trägerstegen (36,37), insbesondere im Eckbereich der Wandöffnungen (34,35) angreifen und die Gitterstruktur (10) mit einsprechender Stiftverteilung zwischen sich formschlüssig festhalten. Alternativ oder zusätzlich kann eine Formaufnahme (30) z.B. als Einsatzteil ausgebildet werden, welches formschlüssig und passgenau in eine Wandöffnung (34,35) eingesetzt werden kann. Die Formaufnahmen (30) können an einem Aufnahmeteil des Lastaufnahmemittels (29) befestigt sein und in das andere Aufnahmemittel formschlüssig eingreifen.

Das Lastaufnahmemittel (29) kann an einer quer gerichteten Trägerwand (32,33) anliegen und kann dort auch ggf. befestigt werden. Das Lastaufnahmemittel (29) kann z.B. mit einem oder mehreren Befestigungsmitteln (14) am Längsträger (9) und/oder Aufbauboden, z.B. an einem Schraubschaft, befestigt werden. Durch diese Befestigung können Querkräfte und Momente aufgenommen werden.

Der Anbaubeschlag (28) weist außerdem ein geeignetes Verbindungsmittel (47) für die Abstützung und dauerhafte oder lösbare Befestigung eines Anbauteils (23) auf. Dieses Verbindungsmittel (47) kann eine definierte Schnittstelle, z.B. eine bestimmte Anordnung von Schraubbohrungen, Befestigungsstiften oder anderen Verbindungsteilen aufweisen. Durch die Schnittstelle kann sichergestellt werden, dass nur rechtlich zugelassene Anbauteile (23) montiert werden.

Bei der Montage des Straßenfahrzeugs (1) wird der vorgefertigte Fahrzeugaufbau (3) mit dem Fahrgestell (2), insbesondere der Deichsel (4) und dem Trägerchassis (5), verbunden. Der Aufbauschwerpunkt (46) kann sich in Längsrichtung (45) verschieben. Bei gegebener Achslage ändert sich dadurch die Deichsellast an der Kupplungseinrichtung (7).

Zur Einstellung der gewünschten Deichsellast können die Achslage und der Abstand zwischen dem Ankuppelpunkt der Kupplungseinrichtung (7) und der Achse (6) in Längsrichtung (45) verändert werden. Hierfür wird bei der Montage die Deichsellast gemessen und bedarfsweise das Trägerchassis (5) in Längsrichtung (45) verschoben und an der gewünschten Stelle befestigt.

Hierfür können die Befestigungsmittel (14) eine geeignete Verstellbarkeit aufweisen, wobei sie z.B. als in Längsrichtung (45) aufgereihte Gruppe von Bohrungen, als längsgerichtetes Langloch oder in anderer geeigneter Weise ausgebildet sind. Eine Anpassung des Abstands zwischen Deichsel (4) und Trägerchassis kann bedarfsweise über die Register (21) der Verbindungsmittel (20) zwischen den direkt verbundenen Deichsel- und Chassisholmen (8,9) oder zwischen dem Längsverbinder (11) und den angebundenen Deichsel- und Chassisholmen (8,9) erfolgen.

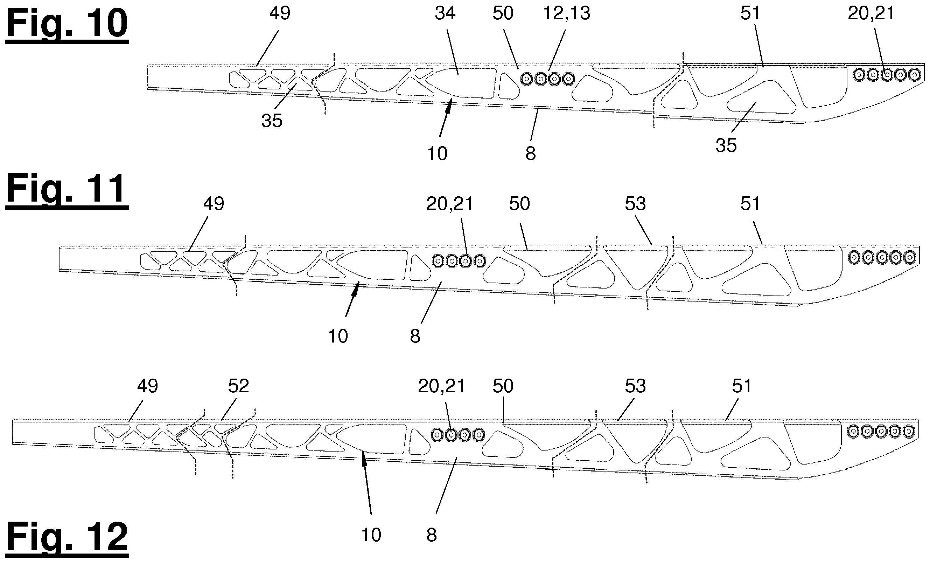

Figur 10, 11 und 12 zeigen beispielhaft einen in seiner Länge variierenden Längsträger (8,9), z.B. in Form des dargestellten Deichselholms (8). Die Gitterstruktur (10) gliedert sich in mehrere Abschnitte oder Strukturabschnitte (49-53). Die Abschnitte (49-53) können unterschiedliche Strukturformen haben und können an unterschiedlichen Längsträgerbereichen angeordnet sein. Die Strukturformen sind an den jeweiligen Längsträgerbereich und die dortigen Anforderungen, insbesondere durch Biegebelastung, Anbauteile oder dgl., angepasst.

Die Strukturgliederung kann in mehrere, z.B. drei, Haupt-Abschnitte (49,50,51) und ggf. in einen oder mehrere Neben-Abschnitte (52,53) erfolgen. Die Haupt-Abschnitte (49,50,51) können untereinander unterschiedliche Gitterstrukturformen haben. Die Haupt-Abschnitte (49,50,51) können andererseits bei allen Längsträgervarianten einheitlich vorhanden sein. Über die einen oder mehreren, z.B. zwei, zusätzlichen Neben-Abschnitte (52,53) kann eine Längenanpassung der Gitterstruktur (10) an unterschiedliche Längen des Längsträgers (8,9) erfolgen.

An einem Längsträger (8,9), z.B. am gezeigten Deichselholm (8), können stets die gleichen Haupt-Abschnitte (49,50,51) mit bevorzugt gleicher Ausbildung und Lage vorhanden sein. Dies sind z.B. der am vorderen und zur Zugkupplung (7) weisenden Trägerende befindliche Abschnitt (49). Dieser kann die vorbeschriebenen, ineinander geschachtelten und relativ kleinen dreieckigen Wandöffnungen (35) aufweisen. Im mittleren Trägerbereich kann der Abschnitt (50) angeordnet sein, der größere Wandöffnungen (34,35) in unterschiedlichen Formen gemäß der vorbeschriebenen Art aufweisen kann. Außerdem kann hier ein Versteifungsbereich (12) mit einer Schnittstelle (13) vorhanden sein. Diese ist z.B. in Abwandlung des vorbeschriebenen Ausführungsbeispiels als Register (21) ausgebildet. Ein dritter Abschnitt (51) kann am rückwärtigen und zum Heck weisenden Trägerende angeordnet sein. Hier können ebenfalls flächenmäßig große Wandöffnungen (34,35) und ggf. Verbindungsmittel (20) der vorbeschriebenen Art, z.B. in einer Reihenanordnung bzw. in einem Register (21), angeordnet sein.

Bei den in Figur 11 und 12 dargestellten längeren Längsträgern (8,9) sind die gleichen Haupt-Abschnitte (49,50,51) vorhanden. Insbesondere sind die endseitigen Haupt-Abschnitte (49,51) gleich ausgebildet und an gleicher Stelle angeordnet. Der Längenunterschied wird durch einen Neben-Abschnitt (53) geschaffen, der zwischen dem mittleren und den rückwärtigen Haupt-Abschnitt (50,51) angeordnet ist. Die Form der Wandöffnungen (34,35) des Neben-Abschnitts (53) kann an diejenige der Nachbarabschnitte (50,51) angepasst sein.

Beim längsten Längsträger (8,99) gemäß Figur 12 kann ein weiterer Neben-Abschnitt (52) zwischen den vorderen und mittleren Haupt-Abschnitt (49,50) eingefügt sein. Dieser Neben-Abschnitt (52) kann eine ähnliche Ausbildung der Wandöffnungen wie der erste Haupt-Abschnitt (49) aufweisen.

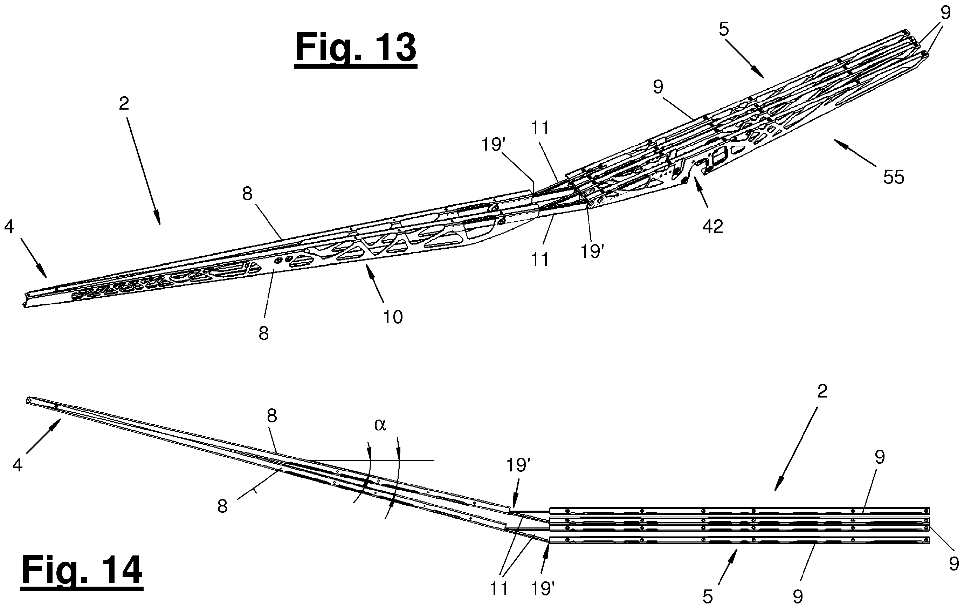

Figur 13 bis 16 zeigen eine Ausbildung des Fahrgestells (2) als Baukastensystem (55), mit dem eine große Variantenbreite des Fahrgestells (2) realisiert werden kann. Variabel können dabei die Längsträger (8,9) und/oder die Längsverbinder (11) sein. In den gezeigten Ausführungsbeispielen sind die Chassisholme (9) untereinander gleich. Hierbei kann aber durch unterschiedliche Deichselholme (8) und/oder unterschiedliche Längsverbinder (11) die Breite und/oder die Länge des Fahrgestells (2) variiert werden. Ferner können zusätzlich oder alternativ die Chassisholme (9) variieren.

Wie Figur 13 und 14 in einer perspektivischen Ansicht und einer Draufsicht verdeutlichen, können die Längsverbinder (11) hinsichtlich der Lage ihrer Abkröpfung (19') und ihres Kröpfungs- oder Biegewinkels (α) variieren. Hierdurch können sich z.B. bei gleichbleibenden Deichselholmen (8) unterschiedliche Deichselwinkel in Verbindung mit unterschiedlichen Fahrgestellbreiten ergeben.

Der Längsverbinder (11) kann in mehrfacher Hinsicht variiert werden. Zum einen kann die Abkröpfung (19') einmal näher am vorderen Ende des Längsverbinders (11) und einmal näher an dessen hinteren und zum Heck weisenden Ende angeordnet sein. Die heckseitige Kröpfungsanordnung führt zu einer größeren Fahrgestellbreite.

Zusätzlich oder alternativ kann der Kröpfungswinkel oder Biegewinkel (α) variiert werden, der beispielhaft in Figur 14 dargestellt ist. Der Kröpfungswinkel (α) kann z.B. für die Verbindung der beiden inneren Chassisholme (9) mit dem inneren Deichselholm (8) bei ca. 13° liegen. Bei der Verbindung der beiden äußeren Chassisholme (9) mit dem äußeren Deichselholm (8) kann der Kröpfungswinkel (α) z.B. bei 15° liegen. Durch den veränderbaren Kröpfungswinkel (α) enden die beiden Deichselholme (8) trotz unterschiedlicher Fahrgestellbreiten am gleichen vorderen Deichselpunkt. Die Winkelgröße kann auch gegenüber den genannten Werten variieren.

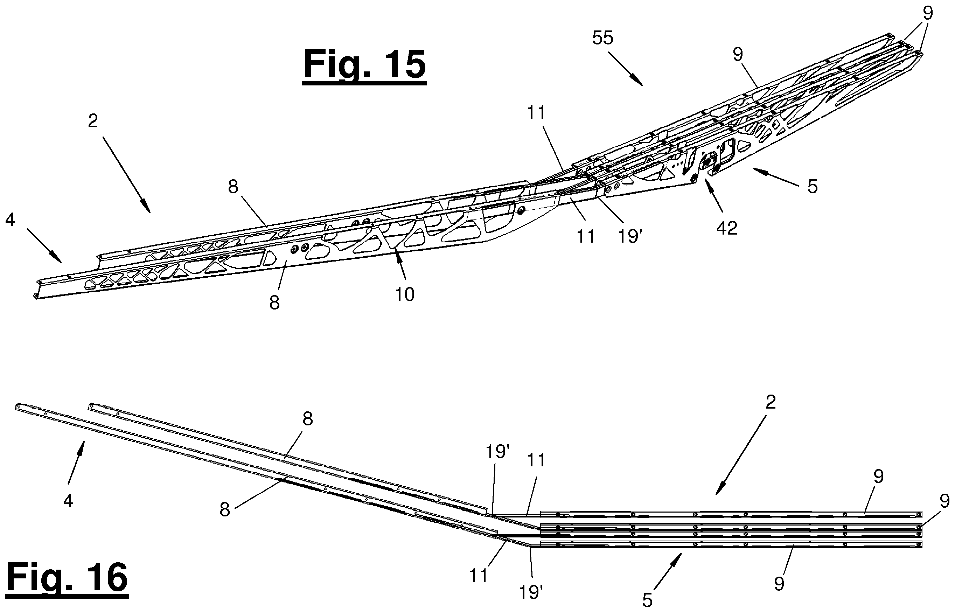

Figur 15 und 16 zeigen in perspektivischer Ansicht und Draufsicht eine Variante, bei der die Länge der Deichselholme (8) variiert. Hierbei kann wiederum die Abkröpfung (19') näher am vorderen oder am hinteren Ende des Längsverbinders (11) liegen. Hierbei ergeben sich unterschiedlich weit ausgestellte Lagen der Chassisholme (9) und entsprechend unterschiedliche Fahrgestellbreiten. Der Kröpfungswinkel (α) ist in diesem Fall ungeändert.

Figur 17 bis 19 verdeutlichen die eingangs genannte Variante des Fahrgestells (2). Diese stimmt weitgehend mit dem vorbeschriebenen ersten Ausführungsbeispiel überein.

Figur 17 bis 19 zeigen die verteilte Anordnung von Hubstützen (54), die z.B. direkt am Boden (nicht dargestellt) des Fahrzeugaufbaus (3) montiert werden können. Sie könne vom Fahrgestell (2) gelöst und distanziert angeordnet sein. Die Hubstützen (54) stützen den abgekuppelten Anhänger im Stand ab, ermöglichen eine Nivellierung und entlasten die Achse (6). Die Hubstützen (54) können auch beim ersten Ausführungsbeispiel vorhanden sein.

Unterschiede können z.B. in der Ausgestaltung der Deichselholme (8) liegen, die einen längeren Versteifungsbereich (12) aufweisen können. Die dortige Schnittstelle (13) kann mehrfach und in einer Reihenanordnung mit einem Register (21) vorhanden sein. Der Stützbeschlag (24) kann dadurch über einen größeren Bereich entlang des Deichselholms (8) verstellt werden. Außerdem zeigen die Deichselholme (8) die in Figur 10 bis 12 dargestellte Gliederung der Gitterstruktur (10).

Auch die Chassisholme (9) können eine geänderte Ausbildung und insbesondere eine geänderte Gitterstruktur (10) aufweisen. Bei der gezeigten Variante ist am vorderen Ende der Chassisholme (9) eine größere Zahl von Verbindungsmitteln (20) als beim ersten Ausführungsbeispiel vorhanden. Das durch die Reihenanordnung gebildete Register (21) ist länger als beim ersten Ausführungsbeispiel und reicht bis in die Nähe der Achse (6). Dementsprechend ändert sich die darunter angeordnete Gitterstruktur (10).

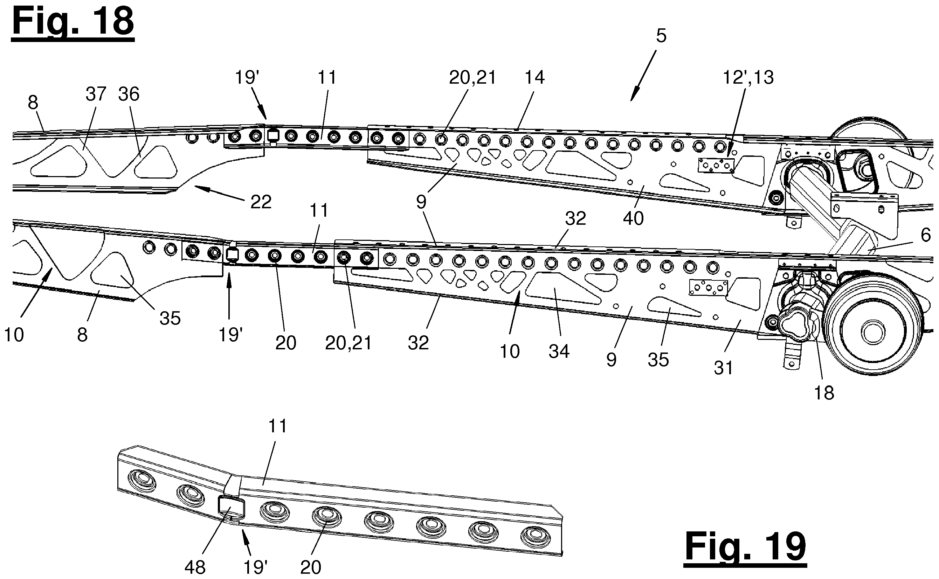

Die größere Zahl von Verbindungsmitteln (20) kann einerseits zur Vergrößerung der Variationsmöglichkeiten bei der Montage des Längsverbinders (11) genutzt werden, welcher ebenfalls gemäß Figur 19 eine größere Zahl von Verbindungsmitteln (20) als im ersten Ausführungsbeispiel haben kann. Andererseits kann das vergrößerte Register (21) der Chassisholme (9) auch zu einer größeren Variationsbreite bei einer direkten Verbindung mit einem Deichselholm (8) genutzt werden, wobei der Längsverbinder (11) entfällt. In diesem Fall haben die Deichselholme (8) am Ende die vorbeschriebene Abkröpfung (19).

Figur 19 verdeutlicht einen abgebogenen Längsverbinder (11) mit einer Abkröpfung (19'). Die Abkröpfung (19') hat eine abgewinkelte Form mit einem schmalen Biegebereich. Die vorbeschriebene Abkröpfung (19) an einem Längsträger (8,9) kann eine ähnliche Biegeform haben. Bei dem gezeigten Längsverbinder (11) kann außerdem im Bereich der Biegestelle eine außenseitige Ausnehmung oder Vertiefung (48) angeordnet sein. Dies kann insbesondere eine Einprägung sein. Diese versteift einerseits den Biegebereich des Längsverbinders (11) und ermöglicht andererseits ein Vorbeibewegen an vorstehenden Napfverschraubungen (20) des angeschlossenen Längsträgers (8,9). Der Längsverbinder (11) kann z.B. als U-Profil aus Stahl oder einem anderen Metall ausgebildet sein.

In Figur 18 und 19 ist die Abkröpfung (19') am vorderen Endbereich des Längsverbinders (11) angeordnet. Alternativ kann sie in der vorbeschriebenen Weise am hinteren Endbereich angeordnet sein. Bei der zweiten Variante von Figur 17 bis 19 können die Form und Ausbildung der Verbindungsmittel (20), insbesondere Napfverschraubungen, die gleiche wie im ersten Ausführungsbeispiel sein.

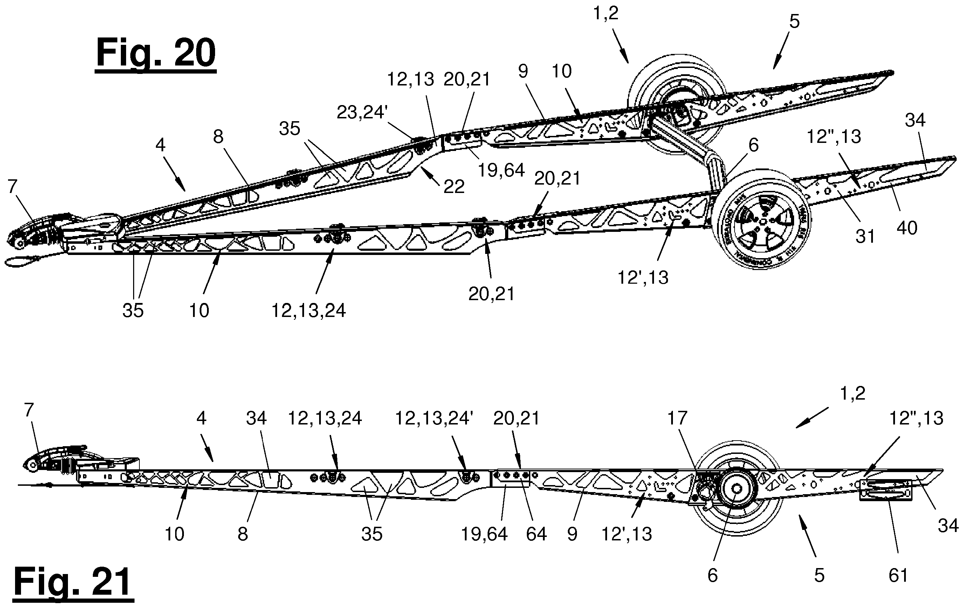

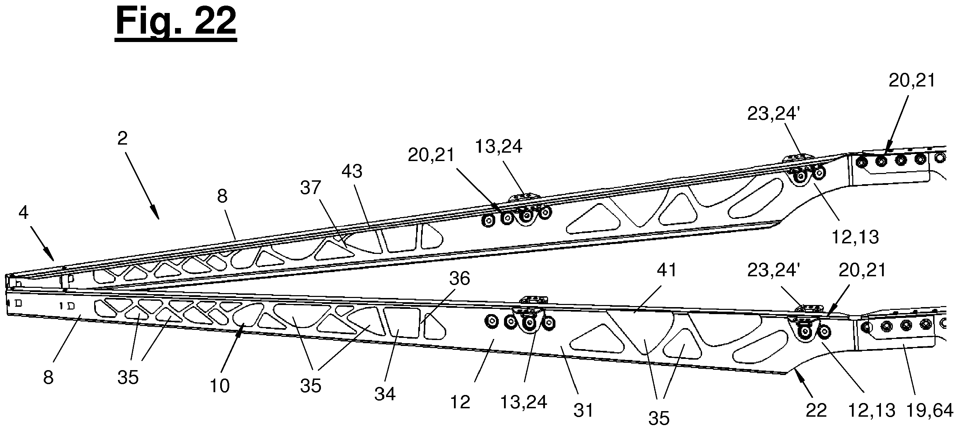

Figur 20 bis 29 zeigen eine weitere Ausführungsvariante des Fahrgestells (2) mit einer Deichsel (4) und einem Trägerchassis (5) sowie zugehörigen Längsträgern (8,9). Die gezeigte Ausführungsform entspricht weitgehend den vorbeschriebenen Ausführungsbeispielen und kann auch ein Baukastensystem (55) bilden.

Die Längsträger bzw. Deichsel- und Chassisholme (8,9) haben eine Gitterstruktur (10) mit einer Strukturgliederung. Die Deichsel- und Chassisholme (8,9) sind in dieser Ausführungsvariante direkt miteinander verbunden. Die Verbindung kann über eine Abkröpfung (19) und Verbindungsmitteln (20) in Einzelanordnung oder in einem Register (21) erfolgen. Die Abkröpfung (19) befindet sich am rückwärtigen Ende der Deichselholme (8). Sie kann alternativ am vorderen Ende der Chassisholme (9) angeordnet sein.

Die einander zugekehrten Trägerenden der Längsträger (8,9) können in der Höhe stark reduziert sein, wodurch sie eine schmale Laschenform (64) erhalten. Die Höhenreduzierung kann vom unteren Trägerrand her und z.B. ausgehend von der Ausklinkung (22) erfolgen. Die vorstehende Laschenform (64) kann am oberen, in konstanter Höhe durchlaufenden Trägerrand angeordnet sein. Die oberen und unteren Ränder der laschenförmigen Trägerenden (64) können parallel sein.

Die einander zugekehrten laschenartigen Trägerenden (64) können Verbindungsmittel (20) in Einzelanordnung oder in einem Register (21) aufweisen und können in gegenseitigen Anlage direkt miteinander verbunden werden. Die Abkröpfung (19) kann sich an einer Lasche befinden. Die überlappenden laschenartigen Trägerenden (64) können gleiche oder unterschiedlichen Höhen und ggf. an einem Längsrand einen abgebogenen Flansch aufweisen.

Die Deichselholme (8) weisen etwa im mittleren Bereich entsprechend der vorhergehenden Ausführungsbeispiele einen verbreiterten Versteifungsbereich (12) an der aufrechten Trägerwand (31) auf, zusammen mit einer Schnittstelle (13) für ein z.B. als Stützbeschlag (24) ausgebildetes Anbauteil.

In der gezeigten Fahrgestellvariante ist ein weiterer Versteifungsbereich (12) am rückwärtigen Endbereich der Deichselholme (8) angeordnet. Er kann eine Schnittstelle (13) mit ein oder mehreren Verbindungsmitteln (20) aufweisen. Diese Anordnung dient zur Aufnahme eines weiteren Anbauteils (23) in Form eines zusätzlichen Stützbeschlags (24').

Der Stützbeschlag (24') kann beidseits am Deichselholm (8) angeordnet sein und dient zur Bildung einer weiteren festen Verbindung zwischen dem jeweiligen Deichselholm (8) und dem Fahrzeugaufbau (3),insbesondere Fahrzeugboden. Die Schnittstelle (13) kann ein Register (21) mit mehreren aufgereihten Verbindungsmitteln (20), z.B. Napfverschraubung, aufweisen. Dies ermöglicht eine Anpassung des zusätzlichen Stützbeschlags (24) an eine geeignete Befestigungsstelle am Fahrzeugaufbau (3).

Durch die Anordnung des Stützbeschlags (24') in der Nähe des rückwärtigen Endes der Deichselholme (8) und nahe an der Verbindungsstelle zwischen den Längsträgern (8,9) kann das Fahrgestell (2) an diesem Verbindungsbereich versteift werden. Auf eine Quertraverse bzw. einen Querträger kann dadurch verzichtet werden. Das gesamte Fahrgestell (2) kann traversenfrei ausgebildet sein.

Die Deichselholme (8) können im Bereich der Versteifung (12) und des Stützbeschlags (24') in der Höhe verjüngt sein und eine vorbeschriebene Ausklinkung (22) aufweisen. Die Kröpfung (19) kann in der vorbeschriebenen Weise ausgebildet sein.

Bei der gezeigten weiteren Fahrgestellvariante können auch am Trägerchassis (5) Modifikationen bestehen. In der gezeigten Ausführungsform ist in Fahrtrichtung vor der Achse (6) ein Versteifungsbereich (12') vorgesehen. Hinter der Achse (6) kann ein weiterer Versteifungsbereich (12") vorhanden sein. An ein oder beiden Versteifungsbereichen (12',12") kann eine Schnittstelle (13) angeordnet sein.

Die Schnittstelle (13) am vorderen Versteifungsbereich (12) kann zur Befestigung eines vorerwähnten hier nicht dargestellten Stoßdämpfers dienen. Sie hat hierfür z.B. eine horizontale Reihe von drei als Durchgangsöffnung ausgebildeten Verbindungsmitteln (20). Zur Versteifung kann innenseitig eine Gegenplatte an der aufrechten Trägerwand (31) angeordnet sein.

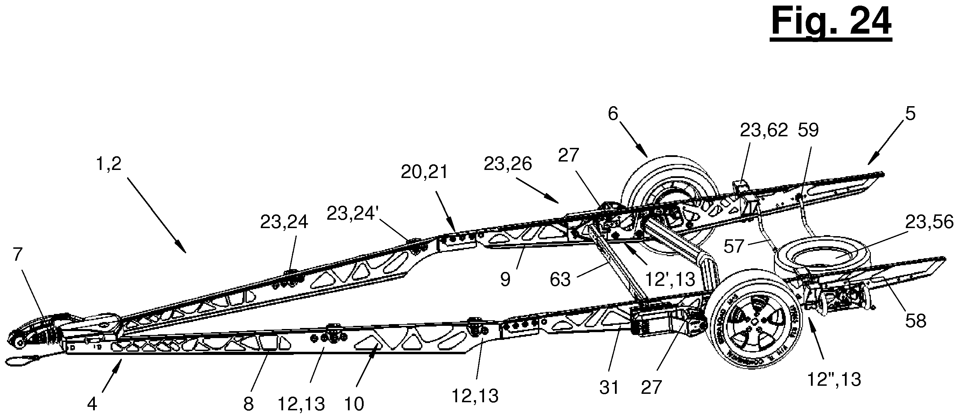

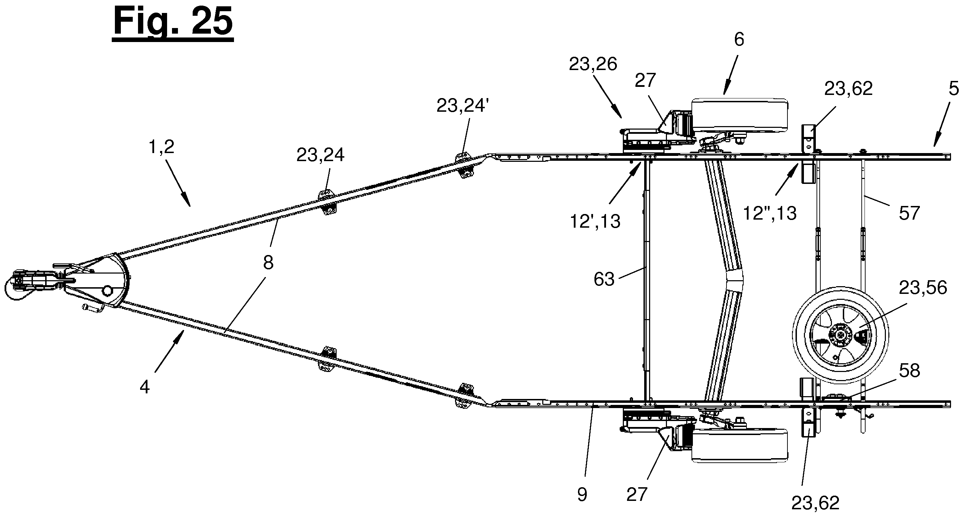

Die Schnittstelle (13) kann weitere Verbindungsmittel (20) aufweisen, z.B. in Form von einfachen Durchgangsöffnungen im unverformten Trägerwandsteg. Dies kann z.B. zur Montage eines Rangierantriebs (26) vor der Achse (6) dienen gemäß Figur 24 und 25. Die Antriebseinheiten (27) können mit ihren Konsolen dabei an der Außenseite der jeweiligen Trägerwand (31) direkt montiert werden. Zwischen den Antriebseinheiten (27) kann eine Querstrebe (63) angeordnet sein, die über endseitige Flanschplatten an der Innenseite der jeweiligen Trägerwand (31) anliegt und mit der jeweiligen Antriebseinheit (27) verbunden ist, z.B. durch eine durchgeführte Verschraubung.

Alternativ können ein oder mehrere andere oder weitere Anbauteile (23) am vorderen Versteifungsbereich (12') bzw. der dortigen Schnittstelle (13) bedarfsweise montiert werden. In diesem Versteifungsbereich (12') ist die aufrechte Trägerwand (31) weitgehend massiv und vollwandig ausgebildet.

Der hintere Versteifungsbereich (12") ist mit Abstand hinter dem Fahrzeugrad angeordnet. Er kann mit seiner Schnittstelle (13) zum Anbau von ein oder mehreren Anbauteilen (23) dienen, die z.B. als Wagenheberaufnahme (62) und/oder als Ersatzradhalter (56) ausgebildet sein können. Der Versteifungsbereich (12") und die Schnittstelle (13) können sich über einen größeren Bereich entlang des Chassisholms (9) nach hinten erstrecken. In diesem Bereich können auch eine oder mehrere Wandöffnungen (34,35) der Gitterstruktur (10) vorhanden sein. Der Versteifungsbereich (12") bzw. die Schnittstelle können sich dabei unterhalb einer Wandöffnung (34) und am unteren Randbereich (40) der aufrechten Trägerwand (31) befinden. Die besagte Verlängerung ermöglicht Positionsvarianten für ein oder mehrere Anbauteile (23) in Längsrichtung. Hierdurch kann Vorgaben von Fahrzeugaufbau (3), z.B. einer Eingangstür und einer darunter angeordneten Trittstufe Rechnung getragen werden.

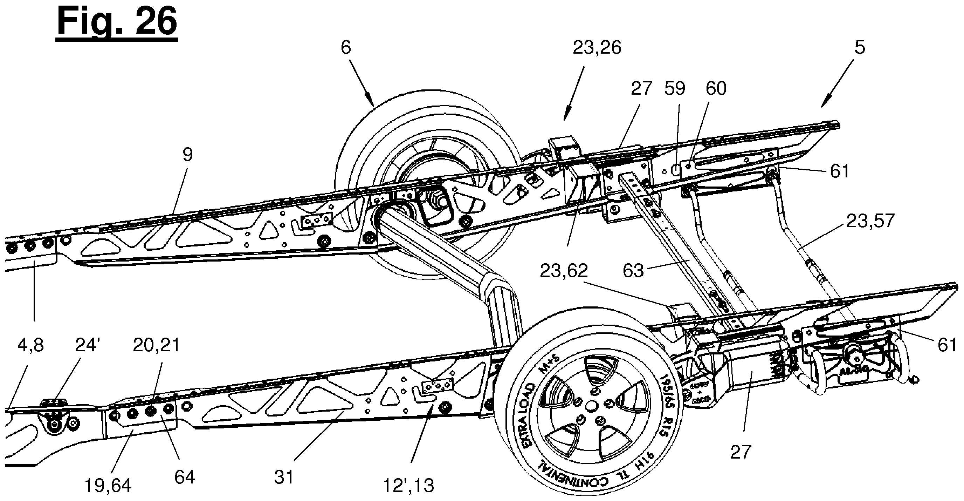

Wie Figur 26 verdeutlicht, ermöglicht der hintere Versteifungsbereich (12") und seine Schnittstelle (13) auch die rückseitige Anordnung eines Rangierantriebs (26) hinter der Achse (6). Zur Kompensation der verringerten Steghöhe der aufrechten Trägerwand (31) kann in diesem Bereich ein zusätzlicher schuhartiger Montagebeschlag für die Befestigung der jeweiligen Antriebseinheit (27) angebaut werden.

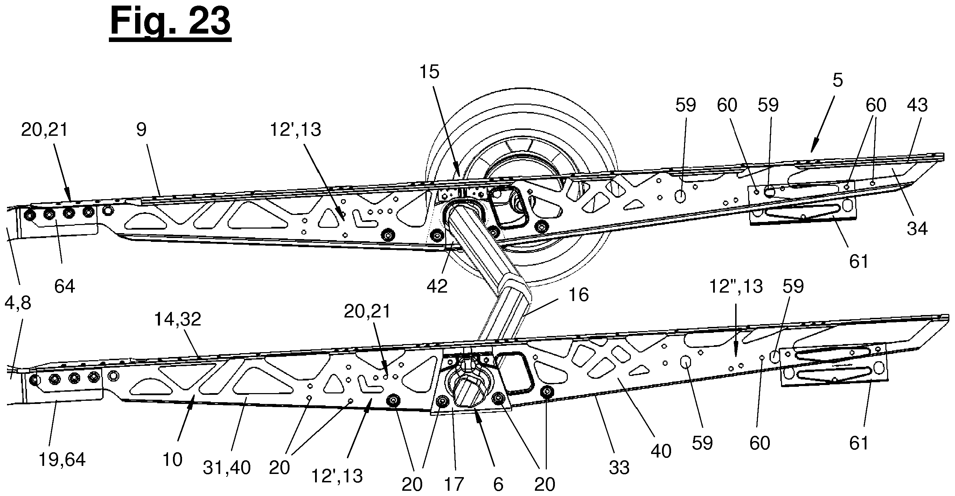

Der Ersatzradhalter (56) weist einen Träger (57) auf, der an beiden Chassisholmen (9) gem. Figur 24 und 25 direkt oder gem. Figur 26 mittelbar über einen Adapter (61) montiert werden kann. Der Adapter (61) kann auch für andere Anbauteile (23) genutzt werden. Wie Figur 23 verdeutlicht, kann der Adapater (61) in seiner Längsposition durch die Schnittstelle (13) variieren.

Die Schnittstelle (13) weist z.B. zwei flächenmäßig größere und z.B. ovale Wandöffnungen (59) mit vertikaler Ausrichtung auf. Hier können am einen Chassisträger (9) die freien Enden des Trägers (57) fest oder lösbar angebunden, insbesondere eingehängt werden. Am anderen Chassisträger (9) auf der anderen Seite kann z.B. eine Konsole (58) montiert werden. Der Träger (57) kann über die Wandöffnungen (59) schwenkbar mit seinem freien Ende am einen Chassisholm (9) eingehängt werden. Die Form der Wandöffnung (59) kann alternativ anders gestaltet sein, z.B. kreisrund, prismatisch, in Schlüssellochform oder dgl..

Am anderen Ende ist der Träger (57) über die Konsole (58) angebunden. Hier kann eine lösbare Verbindung, z.B. eine Schraubverbindung, bestehen. Dies ermöglicht ein bedarfsweises Abschwenken und ggf. Herausziehen des Trägers (57) unter dem Fahrzeug (1). Der Träger (57) kann auch alternativ oder zusätzlich zur Aufnahme eines anderen Anbauteils (23), z.B. eines nicht dargestellten Behälters, insbesondere Wassertanks, benutzt werden.

Der Adapter (61) ist plattenartig ausgebildet und kann gewichtsmindernde Durchgangsöffnungen aufweisen. Er kann am oberen Bereich Durchgangsbohrungen aufweisen, die mit Wandöffnungen (60) am hinteren Versteifungsbereich (12") und der dortigen Schnittstelle (13) korrelieren. Am unteren Rand kann der Adapter (61) die vorbeschriebenen ovalen Wandöffnungen (59) zur Aufnahme der freien Enden des Trägers (57) aufweisen. Am Adapater (61) kann auch die besagte Konsole (58) montiert werden.

Die Chassisholme (9) können im Unterschied zu den vorbeschriebenen Ausführungsbeispielen im Bereich der Achse (6), insbesondere der Achsaufnahme (42), weitere Verbindungsmittel, insbesondere Napfverschraubungen, für den Trägerschild (17) aufweisen. Dies ermöglicht die Montage unterschiedlich breiter Trägerschilde (17), die z.B. für unterschiedliche Achskonstruktionen vorgesehen sind. Bestehende Achskonstruktionen können daher am beanspruchten Fahrgestell (2) weiterhin verwendet werden. Die zusätzlichen Verbindungsmittel (20) sind links und rechts von der Befestigungsstelle der Achse (6) am unteren Randbereich (40) der Trägerwand (31) angeordnet.

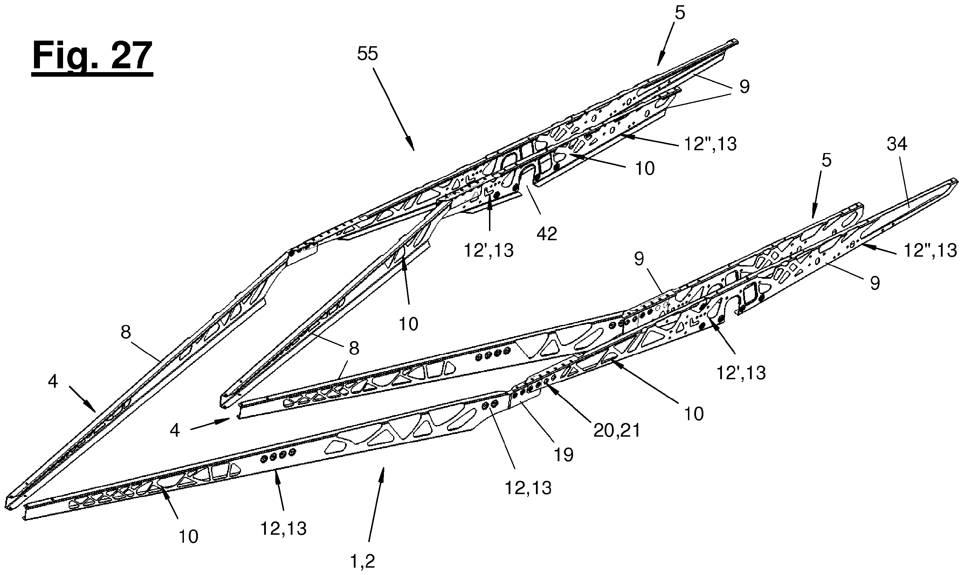

Figur 27 verdeutlicht ein Baukastensystem (55), welches mit unterschiedlichen Deichselholmen (8) und Chassisholmen (9) gebildet werden kann. Die besagten Holme (8,9) sind dabei direkt in der vorbeschriebenen Weise über eine Abkröpfung (19) und die Verbindungsmittel (20) mit oder ohne Register (21) verbunden.

In dem Baukastensystem (55) gibt es unterschiedliche Längen von Deichselholmen (8) und Chassisholmen (9). Hierbei können auch die Winkel der Abkröpfungen (19) variieren. Die Gitterstrukturen (10) sind entsprechend angepasst. Sie können in der vorbeschriebenen Weise eine Strukturgliederung mit Haupt- und Nebenabschnitten aufweisen.

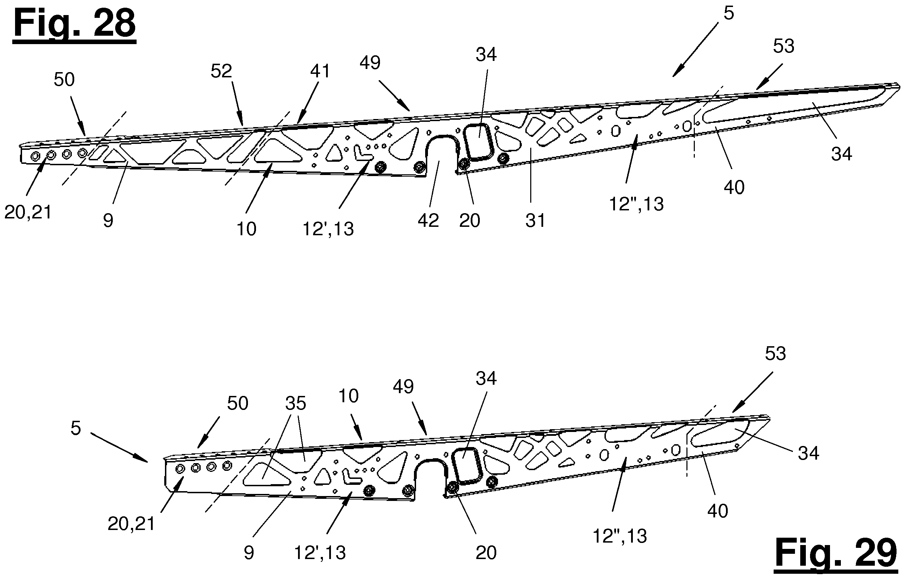

Figur 28 und 29 verdeutlichen eine solche Strukturgliederung für Chassisholme (9) mit verschiedenen Längen. Die Gitterstruktur (10) gliedert sich in einen mittleren Haupt-Abschnitt (49) und einen vorderen Haupt-Abschnitt (50). Der mittlere Haupt-Abschnitt (49) beinhaltet die Achsaufnahme (42) und die vor- und nachgelagerten Versteifungen (12',12") nebst Schnittstellen (13). Der vordere Haupt-Abschnitt (50) weist die Verbindungsmittel und das evtl. Register (21) für die bevorzugt direkte Verbindung mit dem jeweiligen Deichselholm (8) auf.

Bei der längeren Holmvariante von Figur 28 ist ein Neben-Abschnitt der Gliederstruktur zwischen den mittleren und vorderen Haupt-Abschnitten (49,50) eingefügt. Der Neben-Abschnitt (52) weist eine Gitterstruktur (10) mit z.B. unterschiedlich gerichteten und unterschiedlich großen dreieckigen Wandöffnungen (35) auf.

Beide Strukturgliederungen haben auch einen hinteren Neben-Abschnitt (53). Dieser variiert in der Länge. Er beinhaltet z.B. eine im Wesentlichen viereckige Wandöffnung (34), die je nach Holm- und Abschnittslänge eine unterschiedliche Länge haben kann. Unterhalb der Wandöffnung (34) ist der untere Trägerrand (40) angeordnet. Hier kann auch ein Teil der hinteren Versteifung (12") und der Schnittstelle (13) angeordnet sein.

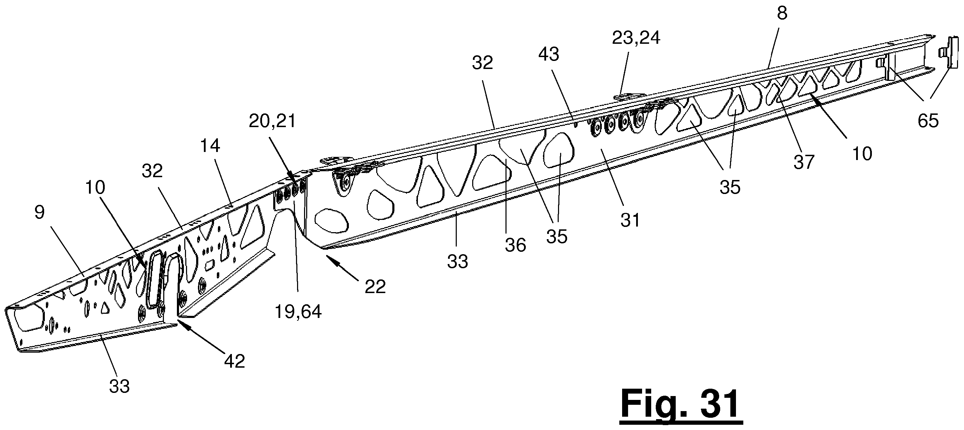

Figur 30 und 31 zeigen eine weitere Variante des Fahrgestells (2) und der Ausbildung der Längsträger (8,9). Die gezeigte Ausführungsform entspricht weitgehend den vorbeschriebenen Ausführungsbeispielen.

Die Abwandlungen gegenüber den vorbeschriebenen Ausführungsbeispielen betreffen zum einen die Gitterstruktur (10), die an den Längsträgern (8) bzw. Deichselholmen im Wesentlichen dreieckige Wandöffnungen (35) aufweist.

In dieser Variante enden sämtliche Wandöffnungen (34,35) mit Abstand unterhalb des oberen Randes der Längsträger (8,9), wobei ein oberer massiver Randbereich (39) an der aufrechten Trägerwand (31) gebildet wird. Der obere massive Randbereich (39) kann sich ununterbrochen über die gesamte jeweilige Trägerlänge erstrecken. Bei der Variaten von Figur 30 und 31 entfallen auch die in den vorherigen Ausführungsbeispielen gezeigten Taillierungen (41).

Figur 31 verdeutlicht außerdem eine andere Gestaltung des Flansches (43). Dieser weist eine über seine Länge bzw. die Trägerlänge variierende Flanschhöhe bzw. Höhe der abwärts gerichteten Erstreckung auf. Der Flansch (43) ist in dieser Ausführungsform nur an den vorderen Längsholmen (8) bzw. Deichselholmen angeordnet. Die Flanschhöhe ist dabei an dem vorderen und der Kupplungseinrichtung (7) zugewandten Trägerende größer als an dem anderen, hinteren Trägerende. Die Flanschgeometrie ist vorteilhaft für eine Versteifung des Längsträgers (8).

Am besagten vorderen Trägerende des Längsträgers (8) können eine oder mehrere Aussteifungen (65) angeordnet sein. Diese sind in Figur 31 dargestellt. Sie haben z.B. eine Rohrform oder seitlich offene Hülsenform und werden in aufrechter Ausrichtung zwischen der oberen und unteren Trägerwand (32,33) angeordnet. Sie können hier anliegen und ggf. eingespannt sein. Die Aussteifungen (65) wirken in der vertikalen Richtung stabilisierend und können in ihrem hohlen Innenraum durchgesteckte Schrauben oder andere Verbindungsmittel aufnehmen, die z.B. für die Montage der Kupplungseinrichtung (7) eingesetzt werden. Das Deichselende wird durch diese Gestaltung versteift und kann die dynamischen Fahrkräfte besser zwischen der Kupplungseinrichtung (7) und der Deichsel (4) sowie den weiteren Komponenten des Fahrgestells (2) übertragen.

Die Längsträger (8,9) sind auch in der Variante von Figur 30 und 31 direkt miteinander verbunden. Hierbei können laschenartige Trägerenden (64) zusammen mit einer Abkröpfung (19) und einer Register- oder Reihenanordnung (21) von Verbindungsmitteln (20) eingesetzt werden.

Die Achse (6) ist in dieser Ausführungsform z.B. als Längslenkerachse ausgebildet und weist einen geraden Achskörper (16) auf.

Die Längsträger (9) bzw. Chassisholme haben bei der Ausführungsvariante von Figur 30 und 31 einfach abgewinkelte obere und untere Trägerwände (32,33). Der in den anderen Ausführungsformen zum Teil gezeigte Flansch (43) kann bei dieser Variante entfallen.

Die Längsträger (9) bzw. Chassisholme weisen außerdem an der Achsaufnahme (42) eine zusätzliche Versteifung auf. Dies kann z.B. von einer nach innen gerichteten Abkantung am oberen Bereich des Ausschnitts in der aufrechten Trägerwand (31) gebildet werden. Oberhalb des Ausschnitts kann in dem oberen Randbereich (39) eine weitere Aussteifung in Form einer angeschweißten oder auf andere Weise befestigten Verstärkungsplatte vorgesehen sein. In Figur 23 des vorhergehenden Ausführungsbeispiels ist eine solche Verstärkungsplatte dargestellt.

Abwandlungen der gezeigten und beschriebenen Ausführungsformen sind in verschiedener Weise möglich. Insbesondere können die Merkmale der gezeigten Ausführungsbeispiele und der genannten Varianten beliebig miteinander kombiniert und ggf. ausgetauscht werden, solange dies im Rahmen der anhängenden Ansprüche bleibt.

Die Querschnittsgeometrie der Trägerprofile kann variieren, z.B. in Form eines Z- oder L-Profils. Die untere quer gerichtete Trägerwand (33) kann ggf. entfallen. Die Längsträger (8,9) können als metallisches Schweißteil ausgebildet sein. Auch eine Ausbildung als mehrschichtiger Verbundkörper, Sandwichkörper oder dgl. ist möglich. Die Gitterstruktur (10) kann ebenfalls variieren hinsichtlich Form, Größe und Verteilung der Wandöffnungen (34,35) sowie der Wandstege (36,37) und der Versteifungsbereiche (12). Die Abkröpfung (19) für den Deichselwinkel kann alternativ am vorderen Ende eines Chassisholms (9) angeordnet sein. Variieren können außerdem Form, Zahl und Anordnung der Abschnitte bzw. Strukturabschnitte (49-53).

### BEZUGSZEICHENLISTE

- 1: Straßenfahrzeug, Anhänger, Kraftfahrzeug
- 2: Fahrgestell
- 3: Fahrzeugaufbau
- 4: Deichsel
- 5: Trägerchassis, Anbauchassis
- 6: Achse
- 7: Kupplungseinrichtung
- 8: Längsträger, Deichselholm
- 9: Längsträger, Chassisholm
- 10: Gitterstruktur
- 11: Längsverbinder
- 12: Versteifungsbereich
- 12': Versteifungsbereich
- 12": Versteifungsbereich
- 13: Schnittstelle
- 14: Befestigungsmittel
- 15: Achsträger
- 16: Achskörper, Achsrohr
- 17: Trägerschild
- 18: Radschwinghebel
- 19: Abkröpfung
- 19': Abkröpfung
- 20: Verbindungsmittel, Napfverschraubung
- 21: Register
- 22: Ausklinkung
- 23: Anbauteil
- 24: Stützbeschlag
- 24': Stützbeschlag
- 25: Stoßdämpfer
- 26: Rangierantrieb
- 27: Antriebseinheit
- 28: Anbaubeschlag
- 29: Lastaufnahmemittel, Spannplatte
- 30: Formaufnahme
- 31: Trägerwand aufrecht
- 32: Trägerwand quer oben
- 33: Trägerwand quer unten
- 34: Wandöffnung, viereckig
- 35: Wandöffnung, dreieckig
- 36: Wandsteg
- 37: Wandsteg
- 38: Stegknoten
- 39: Randbereich oben
- 40: Randbereich unten
- 41: Taillierung
- 42: Achsaufnahme
- 43: Flansch, Abkantung
- 44: Behälter
- 45: Längsrichtung, Fahrtrichtung
- 46: Schwerpunkt Fahrzeugaufbau
- 47: Verbindungsmittel
- 48: Ausnehmung, Einprägung
- 49: Abschnitt, Strukturabschnitt
- 50: Abschnitt, Strukturabschnitt
- 51: Abschnitt, Strukturabschnitt
- 52: Abschnitt, Strukturabschnitt
- 53: Abschnitt, Strukturabschnitt
- 54: Hubstütze
- 55: Baukastensystem
- 56: Ersatzradhalter
- 57: Träger
- 58: Konsole
- 59: Wandöffnung, oval
- 60: Wandöffnung
- 61: Adapter
- 62: Wagenheberaufnahme
- 63: Querstrebe
- 64: laschenförmiges Trägerende
- 65: Aussteifung

- α: Kröpfungswinkel, Biegewinkel

## Patentansprüche

1. Längsträger für ein Fahrgestell (2) eines Straßenfahrzeugs (1), wobei der Längsträger (8) als Deichselholm einer bevorzugt starren, V-förmigen Deichsel (4) ausgebildet ist und der im Querschnitt profilierte Längsträger (8) eine in Trägerlängsrichtung laufende aufrechte dünnwandige Trägerwand (31) mit einer an ihrem oberen und/oder unteren Längsrand angeordneten, quer gerichteten Trägerwand (32,33) aufweist, wobei die aufrechte Trägerwand (31) mehrere Wandöffnungen (34,35) und dazwischen angeordnete Wandstege (36,37) aufweist, **dadurch gekennzeichnet, dass** die aufrechte Trägerwand (31) eine Gitterstruktur (10) mit Wandöffnungen (34,35) und mit schmalen Wandstegen (36,37) zwischen den Wandöffnungen (34,35) aufweist, wobei zumindest einige Wandstege (36,37) schräg zur Trägerlängsrichtung und dabei in unterschiedlichen Richtungen geneigt sind.

2. Längsträger nach Anspruch 1, **dadurch gekennzeichnet, dass** der als Deichselholm ausgebildete Längsträger (8) für eine direkte Verbindung oder für eine indirekte Verbindung mittels eines Längsverbinders (11) mit jeweils einem als Chassisholm ausgebildeten Längsträger (8) vorgesehen und ausgebildet ist, wobei die Verbindung bevorzugt verstellbar ist.

3. Längsträger nach Anspruch 2, **dadurch gekennzeichnet, dass** der als Chassisholm ausgebildete Längsträger (9) im Querschnitt profiliert ist und eine in Trägerlängsrichtung laufende aufrechte dünnwandige Trägerwand (31) mit einer an ihrem oberen und/oder unteren Längsrand angeordneten, quer gerichteten Trägerwand (32,33) aufweist, wobei die aufrechte Trägerwand (31) mehrere Wandöffnungen (34,35) und dazwischen angeordnete Wandstege (36,37) aufweist, wobei die aufrechte Trägerwand (31) eine Gitterstruktur (10) mit Wandöffnungen (34,35) und mit schmalen Wandstegen (36,37) zwischen den Wandöffnungen (34,35) aufweist, wobei zumindest einige Wandstege (36,37) schräg zur Trägerlängsrichtung und dabei in unterschiedlichen Richtungen geneigt sind.

4. Längsträger nach einem der vorhergehenden Ansprüche, **dadurch gekennzeichnet, dass** zumindest einige Wandöffnungen (34,35) übereinander und mit teilweiser Überlappung in Trägerlängsrichtung angeordnet sind.

5. Längsträger nach einem der vorhergehenden Ansprüche, **dadurch gekennzeichnet, dass** einige Wandöffnungen (35) eine im wesentlichen dreieckige Form und einige Wandöffnungen (34) eine im wesentlichen viereckige Form aufweisen.

6. Längsträger nach einem der vorhergehenden Ansprüche, **dadurch gekennzeichnet, dass** die Gitterstruktur (10) an einem Längsträger (8,9) in mehrere Abschnitte (49-53) gegliedert ist, wobei diese untereinander bevorzugt unterschiedliche Strukturformen haben und an unterschiedlichen Längsträgerbereichen angeordnet sind.

7. Längsträger nach einem der vorhergehenden Ansprüche, **dadurch gekennzeichnet, dass** die aufrechte Trägerwand (31) einen oder mehrere Versteifungsbereiche (12,12',12") mit einem in Trägerlängsrichtung verbreiterten Wandsteg und mit einer Schnittstelle (13) für ein Anbauteil (23) und/oder einen Adapter (61) aufweist.

8. Längsträger nach einem der vorhergehenden Ansprüche, **dadurch gekennzeichnet, dass** die aufrechte Trägerwand (31) an einem Trägerende eine in Trägerlängsrichtung ausgerichtete, vorzugsweise einzelne, Reihe von bevorzugt formschlüssigen Verbindungsmitteln (20), insbesondere napfartigen kreisrunden oder länglichen Wandverformungen, aufweist.

9. Längsträger nach einem der vorhergehenden Ansprüche, **dadurch gekennzeichnet, dass** ein Ende eines Längsträgers (8,9), insbesondere eines Deichselholms, eine seitlich aus der aufrechten Trägerwandebene abgebogene Abkröpfung (19), insbesondere mit Verbindungsmitteln (20) für eine direkte Verbindung mit einem anderen Längsträger (9,8), aufweist.

10. Fahrgestell für ein Straßenfahrzeug (1), wobei das Fahrgestell (2) eine Deichsel (4) mit einem Längsträger (8) und ein Trägerchassis (5) mit einem Längsträger (9) und mit mindestens einer Achse (6) aufweist, **dadurch gekennzeichnet, dass** der Längsträger (8) der Deichsel (4) nach mindestens einem der Ansprüche 1 bis 9 ausgebildet ist und vorzugsweise der Längsträger (9) des Trägerchassis (5) nach einem der Ansprüche 2 bis 9 ausgebildet ist.

11. Fahrgestell nach Anspruch 10, **dadurch gekennzeichnet, dass** die Längsträger (8) der V-förmigen starren Deichsel (4) und die parallelen Längsträger (9) mit der aufgenommenen Achse (6) des Trägerchassis (5) direkt oder indirekt, vorzugsweise in Längsrichtung (45) verstellbar, miteinander verbunden sind.

12. Fahrgestell nach Anspruch 10 oder 11, **dadurch gekennzeichnet, dass** am Fahrgestell (2) ein Rangierantrieb (26) angeordnet ist, wobei eine Antriebseinheit (27) des Rangierantriebs (26) an der Achse (6) oder an einer aufrechten Trägerwand (31) angeordnet und abgestützt ist.

13. Fahrgestell nach einem der Ansprüche 10 bis 12, **dadurch gekennzeichnet, dass** das Fahrgestell (2) als Baukastensystem (55) mit mehreren, jeweils unterschiedlichen Längsträgern (8,9) und ggf. unterschiedlichen Längsverbindern (11) ausgebildet ist.

14. Straßenfahrzeug mit einem Fahrgestell (2) und einem Fahrzeugaufbau (3), **dadurch gekennzeichnet, dass** das Fahrgestell (2) nach mindestens einem der Ansprüche 10 bis 13 ausgebildet ist, wobei vorzugsweise der Fahrzeugaufbau (3) direkt und bevorzugt in Kontakt mit den Längsträgern (8,9) verbunden ist.

15. Verfahren zur Montage eines Straßenfahrzeugs (1), insbesondere eines Anhängers, welches ein Fahrgestell (2) nach Anspruch 10 mit einer Deichsel (4) und einem Trägerchassis (5) sowie einen Fahrzeugaufbau (3) mit einem Schwerpunkt (46) aufweist, wobei der Fahrzeugaufbau (3) auf Längsträgern (8,9) der Deichsel (4) und des Trägerchassis (5) liegend befestigt wird, **dadurch gekennzeichnet, dass** bei der Montage die Deichsellast gemessen wird und das Trägerchassis (5) zur Einstellung einer vorgegebenen Deichsellast in Längsrichtung (45) des Straßenfahrzeugs (1) relativ zum Fahrzeugaufbau (3) verschoben und in einer der vorgegebenen Deichsellast entsprechenden Position am Fahrzeugaufbau (3) befestigt wird.

## Claims

1. Longitudinal support for an underbody (2) of a road vehicle (1), wherein the longitudinal support (8) is designed as a drawbar rail of a preferably rigid V-shaped drawbar (4) and the cross-sectionally profiled longitudinal support (8) has an upright thin-walled support wall (31) extending in a support longitudinal direction and having a transversely directed support wall (32, 33) which is arranged on its upper and/or lower longitudinal edge, wherein the upright support wall (31) has multiple wall openings (34, 35) and wall webs (36, 37) arranged therebetween, **characterized in that** the upright support wall (31) has a mesh-type structure (10) with wall openings (34, 35) and with narrow wall webs (36, 37) between the wall openings (34, 35), wherein at least some wall webs (36, 37) are inclined obliquely to the support longitudinal direction and in different directions.

2. Longitudinal support according to Claim 1, **characterized in that** the longitudinal support (8) designed as a drawbar rail is intended and configured for direct connection or for indirect connection by means of a longitudinal connector (11) to a respective longitudinal support (8) designed as a chassis rail, wherein the connection is preferably adjustable.

3. Longitudinal support according to Claim 2, **characterized in that** the longitudinal support (9) designed as a chassis rail is cross-sectionally profiled and has an upright thin-walled support wall (31) extending in a support longitudinal direction and having a transversely directed support wall (32, 33) which is arranged on its upper and/or lower longitudinal edge, wherein the upright support wall (31) has multiple wall openings (34, 35) and wall webs (36, 37) arranged therebetween, wherein the upright support wall (31) has a mesh-type structure (10) with wall openings (34, 35) and with narrow wall webs (36, 37) between the wall openings (34, 35), wherein at least some wall webs (36, 37) are inclined obliquely to the support longitudinal direction and in different directions.

4. Longitudinal support according to one of the preceding claims, **characterized in that** at least some wall openings (34, 35) are arranged one above the other and so as to partially overlap in the support longitudinal direction.

5. Longitudinal support according to one of the preceding claims, **characterized in that** some wall openings (35) have a substantially triangular shape, and some wall openings (34) have a substantially quadrilateral shape.

6. Longitudinal support according to one of the preceding claims, **characterized in that** the mesh-type structure (10) on a longitudinal support (8, 9) is divided into multiple sections (49-53), wherein these, among one another, preferably have different structure forms and are arranged on different longitudinal-support regions.

7. Longitudinal support according to one of the preceding claims, **characterized in that** the upright support wall (31) has one or more stiffening regions (12, 12', 12") with a wall web which is widened in the support longitudinal direction and with an interface (13) for an attachment part (23) and/or an adaptor (61).

8. Longitudinal support according to one of the preceding claims, **characterized in that**, at one support end, the upright support wall (31) has a preferably single row, oriented in the support longitudinal direction, of preferably form-fitting connecting means (20), in particular cup-like circular or elongate wall deformations.

9. Longitudinal support according to one of the preceding claims, **characterized in that** one end of a longitudinal support (8, 9), in particular a drawbar rail, has a bend (19) which is bent laterally away from the upright support-wall plane and which, in particular, has connecting means (20) for direct connection to another longitudinal support (9, 8).

10. Underbody for a road vehicle (1), wherein the underbody (2) has a drawbar (4) with a longitudinal support (8) and has a support chassis (5) with a longitudinal support (9) and with at least one axle (6), **characterized in that** the longitudinal support (8) of the drawbar (4) is designed according to at least one of Claims 1 to 9, and preferably the longitudinal support (9) of the support chassis (5) is designed according to one of Claims 2 to 9.

11. Underbody according to Claim 10, **characterized in that** the longitudinal supports (8) of the V-shaped rigid drawbar (4) and the parallel longitudinal supports (9), with the received axle (6) of the support chassis (5), are directly or indirectly connected to one another, preferably so as to be adjustable in a longitudinal direction (45).

12. Underbody according to Claim 10 or 11, **characterized in that** a manoeuvring drive (26) is arranged on the underbody (2), wherein a drive unit (27) of the manoeuvring drive (26) is arranged on and supported against the axle (6) or an upright support wall (31) .

13. Underbody according to one of Claims 10 to 12, **characterized in that** the underbody (2) is formed as a modular system (55) with multiple, respectively different longitudinal supports (8, 9) and possibly different longitudinal connectors (11).

14. Road vehicle having an underbody (2) and having a vehicle structure (3), **characterized in that** the underbody (2) is designed according to at least one of Claims 10 to 13, wherein preferably the vehicle structure (3) is connected directly to the longitudinal supports (8, 9) and preferably so as to be in contact therewith.

15. Method for assembling a road vehicle (1), in particular a trailer, which has an underbody (2) according to Claim 10 with a drawbar (4) and with a support chassis (5), and has a vehicle structure (3) with a centre of gravity (46), wherein the vehicle structure (3) is fastened resting on longitudinal supports (8, 9) of the drawbar (4) and of the support chassis (5), **characterized in that**, during the assembly, the drawbar load is measured and the support chassis (5), for setting a predefined drawbar load, is displaced in the longitudinal direction (45) of the road vehicle (1) relative to the vehicle structure (3) and is fastened to the vehicle structure (3) in a position corresponding to the predefined drawbar load.

## Revendications

1. Poutre longitudinale pour un châssis (2) d'un véhicule routier (1), la poutre longitudinale (8) étant réalisée sous forme d'une barre de timon d'un timon (4) de préférence rigide et en forme de V, et la poutre longitudinale (8), profilée en section transversale, présente une paroi verticale de support (31) à paroi mince s'étendant dans la direction longitudinale de la poutre longitudinale, et une paroi de support (32, 33) orientée transversalement et disposée sur son bord longitudinal supérieur et/ou inférieur, la paroi de support verticale (31) présentant plusieurs ouvertures de paroi (34, 35) et des nervures de paroi (36, 37) agencées entre celles-ci,
**caractérisée en ce que** la paroi de support verticale (31) présente une structure en treillis (10) avec des ouvertures de paroi (34, 35) et avec des nervures de paroi étroites (36, 37) entre les ouvertures de paroi (34, 35), au moins quelques nervures de paroi (36, 37) étant inclinées en biais par rapport à la direction longitudinale du support et selon des directions différentes.

2. Poutre longitudinale selon la revendication 1, **caractérisée en ce que** la poutre longitudinale (8) réalisée sous forme de barre de timon est prévue et conçue pour une liaison directe ou pour une liaison indirecte au moyen d'un raccord longitudinal (11) avec respectivement une poutre longitudinale (8) réalisée sous forme de poutre de châssis, la liaison étant de préférence réglable.

3. Poutre longitudinale selon la revendication 2, **caractérisée en ce que** la poutre longitudinale (9) réalisé sous forme de poutre longitudinale de châssis est profilée en section transversale et présente une paroi de support (31) verticale à paroi mince s'étendant dans la direction longitudinale de la poutre longitudinale avec une paroi de support (32, 33) orientée transversalement et disposée sur son bord longitudinal supérieur et/ou inférieur, la paroi de support verticale (31) présentant une pluralité d'ouvertures de paroi (34, 35) et des nervures de paroi (36, 37) disposées entre celles-ci, la paroi de support verticale (31) présentant une structure en treillis (10) avec des ouvertures de paroi (34, 35) et avec des nervures de paroi étroites (36, 37) entre les ouvertures de paroi (34, 35), au moins quelques nervures de paroi (36, 37) étant inclinées en biais par rapport à la direction longitudinale du support et selon des directions différentes.

4. Poutre longitudinale selon l'une des revendications précédentes, **caractérisée en ce qu'**au moins quelques ouvertures de paroi (34, 35) sont aménagées les unes au-dessus des autres et avec un chevauchement partiel dans la direction longitudinale de la poutre.

5. Poutre longitudinales selon l'une quelconque des revendications précédentes, **caractérisée en ce que** certaines ouvertures de paroi (35) ont une forme sensiblement triangulaire et certaines ouvertures de paroi (34) ont une forme sensiblement quadrangulaire.

6. Poutre longitudinale selon l'une des revendications précédentes, **caractérisée en ce que** la structure en treillis (10) est divisée en plusieurs sections (49-53) sur une poutre longitudinale (8, 9), celles-ci ayant de préférence des formes de structure différentes entre elles et étant agencées sur différentes zones de la poutre longitudinale.

7. Poutre longitudinale selon l'une des revendications précédentes, **caractérisée en ce que** la paroi de support verticale (31) présente une ou plusieurs zones de renforcement (12, 12', 12'') avec une âme de paroi élargie dans la direction longitudinale de la poutre longitudinale et avec une interface (13) pour une pièce rapportée (23) et/ou un adaptateur (61).

8. Poutre longitudinale selon l'une des revendications précédentes, **caractérisée en ce que** la paroi verticale de support (31) de la poutre longitudinale présente, à une extrémité de la poutre longitudinale, une rangée, de préférence unique, orientée dans la direction longitudinale de la poutre longitudinale, de moyens de liaison (20), de préférence à engagement positif, en particulier des déformations de paroi circulaires ou allongées en forme de cuvette.

9. Poutre longitudinale selon l'une des revendications précédentes, **caractérisée en ce qu'**une extrémité d'une poutre longitudinale (8, 9), en particulier d'une poutre longitudinale de timon, présente un coude (19) recourbé latéralement à partir du plan de la paroi verticale de la poutre longitudinale, en particulier avec des moyens de liaison (20) pour une liaison directe avec une autre poutre longitudinale (9, 8).

10. Châssis pour véhicule routier (1), ledit châssis (2) comportant un timon (4) avec une poutre longitudinale (8) et un châssis porteur (5) avec une poutre longitudinale (9) et avec au moins un essieu (6), **caractérisé en ce que** la poutre longitudinale (8) du timon (4) est réalisée selon au moins l'une des revendications 1 à 9 et, de préférence, la poutre longitudinale (9) du châssis porteur (5) est réalisée selon l'une des revendications 2 à 9.

11. Châssis selon la revendication 10, **caractérisé en ce que** les poutres longitudinales (8) du timon rigide en V (4) et les poutres longitudinales parallèles (9) sont reliés entre elles à l'essieu (6) du châssis porteur (5), directement ou indirectement, de préférence de manière réglable dans la direction longitudinale (45).

12. Châssis selon la revendication 10 ou 11, **caractérisé en ce qu'**un système d'entraînement de manoeuvre (26) est agencé sur le châssis (2), une unité d'entraînement (27) du système d'entraînement de manoeuvre (26) étant agencée et supportée sur l'essieu (6) ou sur une paroi de support verticale (31).

13. Châssis selon l'une des revendications 10 à 12, **caractérisé en ce que** le châssis (2) est réalisé sous la forme d'un système modulaire (55) comportant plusieurs poutre longitudinales (8, 9), chacune différente, et, le cas échéant, différents connecteurs longitudinaux (11).

14. Véhicule routier comprenant un châssis (2) et une caisse de véhicule (3), **caractérisé en ce que** le châssis (2) est réalisé selon au moins l'une des revendications 10 à 13, la caisse de véhicule (3) étant de préférence reliée directement aux poutres longitudinales (8, 9) et de préférence en contact avec celles-ci.

15. Procédé de montage d'un véhicule routier (1), notamment d'une remorque, comportant un châssis (2) selon la revendication 10 avec un timon (4) et un châssis porteur (5) ainsi qu'une caisse de véhicule (3) avec un centre de gravité (46), la caisse de véhicule (3) étant fixée à plat sur des poutres longitudinales (8, 9) du timon (4) et du châssis porteur (5), **caractérisé en ce que**, lors du montage, la charge sur le timon est mesurée et le châssis porteur (5) est déplacé par rapport à la caisse du véhicule (3) pour régler une charge prédéterminée sur le timon dans la direction longitudinale (45) du véhicule routier (1) et est fixé à la carrosserie du véhicule (3) dans une position correspondant à la charge prédéterminée sur le timon.
